# EUROPEAN PATENT SPECIFICATION

(11) **EP 3 122 941 B1**
(45) Date of publication and mention of the grant of the patent: **06.03.2019**
(21) Application number: 15713709.2
(22) Date of filing: 27.03.2015
(51) Int. Cl.: D21H 27/10, B65D 65/02, B65D 65/38, D21H 17/02

(54) **RECONSTITUTED PLANT MATERIAL AND ITS USE FOR PACKAGING, WRAPPING AND FOOD APPLIANCES**
REKONSTITUIERTES PFLANZENMATERIAL UND DESSEN VERWENDUNG FÜR VERPACKUNGS-, EINWICKEL- UND SPEISEVORRICHTUNGEN
MATÉRIAU VÉGÉTAL RECONSTITUÉ ET SON UTILISATION À DES FINS D'EMPAQUETAGE, D'EMBALLAGE ET POUR DES DISPOSITIFS À USAGE ALIMENTAIRE

(30) Priority: 28.03.2014 US 201461971580 P
(43) Date of publication of application: 01.02.2017
(73) Proprietor: SWM Luxembourg s.a.r.l., 5326 Contern (LU)
(72) Inventor: RAGOT, Philippe, LU-5720 Aspelt (LU); BARAT, Laetitia, F-72100 Le Mans (FR); ROUSSEAU, Cédric, F-72000 Le Mans (FR); PONS, Esther, F-33600 Pessac (FR)
(74) Representative: Jones Day
(86) International application number: PCT/EP2015/056745
(87) International publication number: WO 2015/144893

(56) References cited:
- EP-A1- 0 500 931
- EP-A1- 0 630 828
- WO-A1-2011/094840
- JP-A- 2001 104 153
- US-A- 3 847 164
- US-A- 3 860 012
- US-A- 4 182 349
- US-A- 5 006 405
- US-A- 5 858 487
- US-A1- 2003 079 846

## Description

### Field of the Invention

The present invention relates to the use of a plant-based wrapping paper for wrapping food. The plants (raw materials) may be fruits, herbs, medicinal plants, tea, vegetables and/or spices. The invention further relates to its use as packaging material.

### Background of the Invention

In order to improve the taste of food or to provide a specific taste to food, herbs and spices are used for cooking, baking or the like. Generally, such flavoring substances are used in a loose form or as a bouquet garni, or in the form of powders or bouillon cubes. In order to achieve a specific taste of the food, several spices or herbs need to be mixed and applied to the food before or during cooking. Often the spices and herbs are only indirectly in contact with the food, e.g. as they are dissolved or suspended in water or oil, or the direct contact can only be ensured over a short period of time as the flavoring substances loose contact to the food during the preparation process (e.g. by turning over meat in a pan). Therefore, a consistent flavoring often is not possible, also in terms of intensity. Moreover, it is possible that food may loose its flavor during storage or transport.

There is still a need to improve flavoring of food, in particular in terms of simplifying the flavoring process, improve intensity of flavoring and maintain or alter the flavor of food even during storage or transport.

### Summary of the Invention

Generally described herein is a wrapping paper for wrapping food is provided, the wrapping paper comprising a layer of a fibrous plant product and a plant extract applied thereto.

In the present invention, the plant is for example selected from the group consisting of fruits, herbs, medicinal plants, tea, vegetables and/or spices, including mixtures thereof, such as, for example, mixtures of herbs, vegetables and/or spices.

Also described herein is a method for producing the wrapping paper. For example, the method may comprise the steps of:
a) extracting components of at least one plant with a solvent;
b) separating the soluble portion (plant extract) from the non-soluble portion (solid plant particles);
c) optionally refining the non-soluble portion;
d) preparing a sheet-like product from the non-soluble portion;
e) optionally concentrating the soluble portion;
f) applying the soluble portion of step b) or concentrated soluble portion of step e) to the sheet of step d); and
g) drying the product of step f) to obtain the wrapping paper of the invention.

In one embodiment the invention is directed to the use of a wrapping paper for wrapping, flavoring, or preparing food,
wherein the wrapping paper comprises a layer of a fibrous plant product and a plant extract applied thereto;
wherein the wrapping paper does not contain nicotine, aluminum, heavy metals and/or pesticides;
wherein flavoring is transferring a specific aroma, flavor and/or taste to the food which is treated with the wrapping paper; and
wherein preparing is using the wrapping paper within the food

Also described herein is the use of the wrapping paper for packaging food and/or for transport means.

In one embodiment the invention is directed to the use of the inventive wrapping paper for treating food.

In a further embodiment the invention is directed to the use of the inventive wrapping paper for flavoring food.

In a still further embodiment the invention is directed to the use of the inventive wrapping paper for preparing food.

### Brief Description of the Drawings

Fig. 1 is a scheme illustrating the general principle of the use of the wrapping paper of the invention.
Fig. 2a shows a food preparation before cooking using the wrapping paper as a papillote.
Fig. 2b shows the food preparation of Example 2a after oven cooking.
Fig. 3a shows meat covered with the wrapping paper after pan frying during 10 minutes.
Fig. 3b shows the meat of Figure 3a after cooking and taking off the wrapping paper.

### Detailed Description of the Invention

Described herein is a wrapping paper for wrapping food is provided, the wrapping paper comprising a layer of a fibrous plant product and a plant extract applied thereto. The wrapping paper is a plant-based composition or product which is also referred to as plant composition. Hereinafter, the aforementioned wrapping paper is often referred to as "wrapping paper(s)" or "products". The herbal, vegetable, fruit, tea and/or spice composition or bouquet garni is also referred to as "mixture of herbs and spices". These terms are used interchangeably and are not intended to limit the invention.

As used herein, the term "plant" likewise refers to any living organism of the kingdom *Plantae* and includes plants described as grains, fruits and vegetables as well as plant parts, such as roots, barks, seeds, stems, leaves, flowers and fruits.

In the products, the plant is for example selected from the group consisting of fruits, herbs, medicinal plants, tea, vegetables and/or spices, including mixtures thereof, such as mixtures of herbs and vegetables, herbs and fruits, vegetables and spices, fruits and spices or herbs and spices.

As used herein, a spice is a dried seed, fruit, root, bark, or vegetative substance primarily used for flavoring, coloring or preserving food. As used herein, herbs are any plants used for flavoring, food, medicine, or perfume. Culinary use typically distinguishes herbs as referring to the leafy green parts of a plant (either fresh or dried), from a "spice", a product from another part of the plant (usually dried), including seeds, berries, bark, roots and fruits.

In connection with the present invention concerning the term "plant", however, any plant part may be utilized, such as roots, bark, seeds, stems, leaves, flowers and fruit.

The fruits, herbs, medicinal plants, tea, vegetables and spices are for example selected from artemisia, balm, basil, chamomile, chive, cloves, coffee, coriander, dill, garlic, ginger, ginseng, gingko, jasmine, lavender, mint, orange blossom, oregano, persil, rooibos, rosa centifolia, rosemary, thyme, turmeric, sage, pepper, chili pepper, stevia rebaudiana, tarragon, white tea, yellow tea, green tea, oolong tea, black tea, pu-erh tea, vanilla, red or green vine, violet and/or willow.

In some embodiments of the invention, the plant is for example selected from the group consisting of culinary herbs and spices such as:
Ajwain, carom seeds (*Trachyspermum ammi*), Akudjura (*Solanum centrale*), Alexanders (*Smyrnium olusatrum*), Alkanet (*Alkanna tinctoria*), Alligator pepper, mbongo spice (mbongochobi), hepper pepper (*Aframomum danielli*, *A. citratum, A. exscapum*), Allspice (*Pimenta dioica*), Angelica (*Angelica archangelica*), Anise (*Pimpinella anisum*), Aniseed myrtle (*Syzygium anisatum*), Annatto (*Bixa orellana*), Apple mint (*Mentha suaveolens*), Asafoetida (*Ferula assafoetida*), Asarabacca (*Asarum europaeum*), Avens (*Geum urbanum*), Avocado leaf (*Peresea americana*), Barberry (*Berberis vulgaris* and other *Berberis spp.*), Basil, sweet (*Ocimum basilicum*), Basil, lemon (*Ocimum* × *citriodorum*), Basil, Thai (*O*. *basilicum* var. *thyrsiflora*), Basil, Holy (*Ocimum tenuiflorum*), Bay leaf (*Laurus nobilis*), *Bay leaf, Indian, tejpat, malabathrum,* Boldo (*Peumus boldus*), Borage (*Borago officinalis*), Black cardamom (*Amomum subulatum*, *Amomum costatum*), Black mustard (*Brassica nigra*), Blue fenugreek, blue melilot (*Trigonella caerulea*), Brown mustard (*Brassica juncea*), Caraway (*Carum carvi*), Cardamom (*Elettaria cardamomum*), Carob (*Ceralonia siliqua*), Catnip (*Nepeta cataria*), Cassia (*Cinnamomum aromaticum),* Cayenne pepper *(Capsicum annuum*), Celery leaf *(Apium graveolens*), Celery seed (*Apium graveolens*), Chervil (*Anthriscus cerefolium),* Chicory (*Cichorium intybus*)*,* Chili pepper (*Capsicum spp.*), Chives (*Allium schoenoprasum*), Cicely, sweet cicely (*Myrrhis odorata*), Cilantro, coriander greens, coriander herb (*Coriandrum sativum*), Cinnamon, Indonesian (*Cinnamomum burmannii*, *Cassia vera*), Cinnamon, Saigon or Vietnamese (*Cinnamomum loureiroi*), Cinnamon, true or Ceylon (*Cinnamomum verum, C. zeylanicum*), Cinnamon, white (*Canella winterana*), Cinnamon myrtle (*Backhousia myrtifolia*), Clary, Clary sage (*Salvia sclarea*), Clove (*Syzygium aromaticum*), Coriander seed (*Coriandrum sativum*), Costmary (*Tanacetum balsamita*), Cuban oregano (*Plectranthus amboinicus*), Cubeb pepper (*Piper cubeba*), Cudweed (*Gnaphalium* spp.), Culantro, culangot, long coriander (*Eryngium foetidum*), Cumin (*Cuminum cyminum*), Curry leaf (*Murraya koenigii*), Curry plant (*Helichrysum italicum*), Dill seed (*Anethum graveolens*), Dill herb or weed (*Anethum graveolens*), Elderflower (*Sambucus spp.*), Epazote (*Dysphania ambrosioides*), Fennel (*Foeniculum vulgare*), Fenugreek (*Trigonella foenum-graecum*), File powder, gumbo file *(Sassafras albidum*), Fingerroot, *krachai, temu kuntji* (*Boesenbergia rotunda),* Galangal, greater (*Alpinia galanga*), Galangal, lesser (*Alpinia officinarum*), Galingale (*Cyperus spp*.), Garlic chives (*Allium tuberosum*), Garlic (*Allium sativum*),*Garlic*, elephant (*Allium ampeloprasum var. ampeloprasum*), Ginger (*Zingiber officinale*), Ginger, torch, *bunga siantan* (*Etlingera elatior)* (Indonesia), *Golpar,* Persian hogweed (*Heracleum persicum*) (Iran), Grains of paradise (*Aframomum melegueta*), Grains of Selim, Kani pepper (*Xylopia aethiopica*), Horseradish (*Armoracia rusticana*), *Houttuynia cordata* (Vietnam), Huacatay, Mexican marigold, mint marigold (*Tagetes minuta*), Hyssop (*Hyssopus officinalis*), Indonesian bay leaf, *daun salam* (*Syzygium polyanthum*), Jasmine flowers (*Jasminum spp*.), Jimbu (*Allium hypsistum*) (Nepal), Juniper berry (*Juniperus communis*), Kaffir lime leaves, Makrud lime leaves (*Citrus hystrix*) (Southeast Asia), Kala zeera (or kala jira), black cumin (*Bunium persicum*) (South Asia), Kawakawa seeds (*Macropiper excelsum*) (New Zealand), *Kencur*, *galangal, kentjur* (*Kaempferia galanga*),*Keluak*, *kluwak*, *kepayang* (*Pangium edule*), *Kinh gioi*, *Vietnamese balm* (*Elsholtzia ciliata*), *Kokam* seed (*Garcinia indica*) (Indian confectionery), *Korarima,* Ethiopian cardamom, false cardamom (*Aframomum corrorima)* (Eritrea), *Koseret* leaves (*Lippia adoensis*) (Ethiopia), Lavender (*Lavandula spp*.), Lemon balm (*Melissa officinalis*), Lemongrass (*Cymbopogon citratus, C. flexuosus*, and other *Cymbopogon spp*.), Lemon ironbark (*Eucalyptus staigeriana*) (Australia), Lemon myrtle (*Backhousia citriodora*) (Australia), Lemon verbena (*Lippia citriodora*), Leptotes bicolor (Paraguay and southern Brazil), Lesser calamint (*Calamintha nepeta*), *nipitella*, *nepitella* (Italy), Licorice, liquorice (*Glycyrrhiza glabra*), Lime flower, linden flower (*Tilia spp*.), Lovage (*Levisticum officinale*), Mace (*Myristicafragrans*), *Mahlab*, St. Lucie cherry (*Prunus mahaleb*), Marjoram (*Origanum majorana*), Marsh mallow (*Althaea officinalis*), Mastic (*Pistacia lentiscus*), Mint (*Mentha* spp.) 25 species, hundreds of varieties, Mountain horopito (*Pseudowintera colorata*) 'Pepper-plant' (New Zealand), Musk mallow, *abelmosk* (*Abelmoschus moschatus*), Mustard, black, mustard plant, mustard seed (*Brassica nigra*), Mustard, brown, mustard plant, mustard seed (*Brassica juncea*), Mustard, white, mustard plant, mustard seed (*Sinapis alba*), Nasturtium (*Tropaeolum majus*), Nigella, *kalonji*, black caraway, black onion seed (*Nigella sativa*), *Njangsa, djansang* (*Ricinodendron heudelotii*) (West Africa), Nutmeg (*Myristica fragrans*), Neem, Olida *(Eucalyptus olida)* (Australia), Oregano *(Origanum vulgare, O*. *heracleoticum,* and other species), Orris root (*Iris germanica*, *I. florentina*, *I. pallida*), Pandan flower, *kewra* (*Pandanus odoratissimus*), Pandan leaf, screwpine (*Pandanus amaryllifolius*, Paprika *(Capsicum annuum*), Paracress (*Spilanthes acmella*, *Soleracea*) (Brazil), Parsley (*Petroselinum crispum*), Pepper: black, white, and green (*Piper nigrum*), Pepper, Dorrigo (*Tasmannia stipitata*) (Australia), Pepper, long (*Piper longum*), Pepper, mountain, Cornish pepper leaf (*Tasmannia lanceolata*), Peppermint (*Mentha piperata*), Peppermint gum leaf (*Eucalyptus dives*), *Perilla*, *shiso* (*Perilla spp*.), Peruvian pepper (*Schinus molle*), Pandanus amaryllifolius, Brazilian pepper or Pink pepper (*Schinus terebinthifolius*), Quassia (*Quassia amara*) (bitter spice in aperitifs and some beers and fortified wines), Ramsons, wood garlic (*Allium ursinum*), Rice paddy herb (*Limnophila aromatica*) (Vietnam), Rosemary (*Rosmarinus officinalis*), Rue (*Ruta graveolens*), Safflower (*Carthamus tinctorius*), for yellow color, Saffron (*Crocus sativus*), Sage (*Salvia officinalis*), Saigon cinnamon (*Cinnamomum loureiroi*), Salad burnet (*Sanguisorba minor*), *Salep* (*Orchis mascula*), Sassafras (*Sassafras albidum*), Savory, summer (*Satureja horlensis*), Savory, winter (*Satureja montana*), *Silphium, silphion*, *laser*, *laserpicium*, *lasarpicium* (Ancient Roman cuisine, Ancient Greek cuisine), Shiso (Perilla frutescens), Sorrel (*Rumex acetosa*), Sorrel, sheep (*Rumex acetosella*), Spearmint (*Mentha spicata*), Spikenard (*Nardostachys grandiflora* or *N. jatamansi*), Star anise (*Illicium verum*), Sumac (*Rhus coriaria*), Sweet woodruff (*Galium odoratum*), Szechuan pepper, Sichuan pepper (*Zanthoxylum piperitum*), Tarragon (*Artemisia dracunculus*), Thyme (*Thymus vulgaris*), Thyme, lemon (*Thymus* × *citriodorus*), Turmeric (*Curcuma longa*), Vanilla (*Vanilla planifolia*), Vietnamese cinnamon (*Cinnamomum loureiroi*), Vietnamese coriander (*Persicaria odorata*), Voatsiperifery (*Piper borbonense*), Wasabi (*Wasabia japonica*), Water-pepper, smartweed (*Polygonum hydropiper*), Watercress (*Rorippa nasturtium-aquatica*), Wattleseed (from about 120 spp. of Australian *Acacia*), White mustard (*Sinapis alba*), Wild betel (*Piper sarmenlosum*) (Southeast Asia), Wild thyme (*Thymus serpyllum*), Willow herb (*Epilobium parviflorum*), Winter savory (*Satureja montana*), Wintergreen (*Gaultheria procumbens*), Wood avens, herb bennet (*Geum urbanum*), Woodruff (*Galium odoratum*), Wormwood, absinthe (*Artemisia absinthium*), Yellow mustard (*Brassica hirta* = *Sinapis alba*), *Yerba buena*, any of four different species, many unrelated, *Za'alar* (herbs from the genera *Origanum*, *Calamintha*, *Thymus,* and/or *Satureja*), *Zedoary (Curcuma zedoaria*).

In some embodiments of the invention, the plant is selected from the group consisting of teas and herbal teas such as:
Anise tea (seeds or leaves), Asiatic penny-wort leaf, Artichoke tea, Bee Balm, Boldo, Burdock, Caraway tea, Catnip tea, Chamomile tea, Che Dang tea (*Ilex causue* leaves), Chinese knot-weed tea, Chrysanthemum tea, Cinnamon, Coca tea, Coffee tea leaves and coffee cherry tea, Cerasse, Citrus peel (including bergamot, lemon and orange peel), Dandelion coffee, Dill tea, Echinacea tea, Elderberry, European Mistletoe (*Viscum album*), Essiac tea, Fennel, Gentian, Ginger root, Ginseng, Goji, Hawthorn, Hibiscus, Ho Yan Hor Herbal Tea, Honeybush, Horehound, Houttuynia, Hydrangea tea (*Hydrangea serrata* Amacha), Jiaogulan, Kapor tea, Kava root, Kratom, Kuzuyu, Labrador tea, Lapacho (also known as *Taheebo*), Lemon Balm, Lemon and ginger tea, Lemon grass, Luo han guo, Licorice root, Lime blossom, Mint, Mountain Tea, Neem leaf, Nettle leaf, New Jersey Tea, Noni tea, Oksusu cha, Pennyroyal leaf, Pine tea, Qishr, Red clover tea, Red raspberry leaf, Roasted barley tea, Roasted wheat, Rooibos (Red Bush), Rose hip, Roselle petals (species of Hibiscus; aka Bissap, Dah, etc.), Rosemary, Sagebrush, California Sagebrush, Sage, Sakurayu, Salvia, Scorched rice, Skullcap, Serendib (tea), Sobacha, Spicebush (Lindera benzoin), Spruce tea, Staghom sumac fruit, Stevia, St. John's Wort, Tea (*Camellia sinensis*), Thyme, Tulsi, Holy Basil, *Uncaria tomentosa*, commonly known as Cat's Claw, Valerian, Verbena (Vervains), Vetiver, Wax gourd, Wong Lo Kat, Woodruff, and/or Yarrow.

In some embodiments of the invention, the plant is for example selected from the group consisting of medicinal plants such as:
Açai (*Euterpe oleracea*, Alfalfa (*Medicago sativa*), Arnica (*Arnica Montana*, Asthma weed (*Euphorbia hirta*), Astragalus (*Astragalus propinquus*), Barberry (*Berberis vulgaris*), Belladonna (*Atropa belladonna*, Bilberry (*Vaccinium myrtillus*), Bitter gourd (*Momordica charantia*), Bitter leaf (*Vernonia amygdalina*), Bitter orange (*Citrus* × *aurantium*), Black cohosh (*Actaea racemosa*), Blessed thistle (*Cnicus benedictus*), Blueberries (genus *Vaccinium*), Burdock (*Arctium lappa*), Cat's claw (*Uncaria tomentosa*), Cayenne (*Capsicum annuum*), Celery (*Apium graveolens*), Chamomille (*Matricaria recutita* and *Anthemis nobilis*), Chaparral (*Larrea tridentata*), Chasteberry (*Vitex agnus-castus*), Chili (*Capsicum frutescens*), Cinchona, Clove (*Syzygium aromaticum*), Coffee senna (*Cassia occidentalis*),Comfrey (*Symphytum officinale*), Cranberry (*Vaccinium macrocarpon*), Dandelion (*Taraxacum officinale*), Dong quai (*Angelica sinensis*), Elderberry (*Sambucus nigra*), Eucalyptus (*Eucalyptus globulus*), European Mistletoe (*Viscum album*), Evening primrose (*Oenothera* spp.), Fenugreek (*Trigonella foenum-graecum*), Feverfew (*Tanacetum parthenium*), Flaxseed (*Linum usitatissimum*), Garlic (*Allium sativum*), Ginger (*Zingiber officinale*), Gingko (*Gingko biloba*), Ginseng (*Panax ginseng* and *Panax quinquefolius*), Goldenseal (*Hydrastis canadensis*), Grape (*Vitis vinifera*), Guava (*Psidium guajava*), Hawthorn (specifically *Crataegus monogyna* and *Crataegus laevigata*), Hoodia (*Hoodia gordonii*), Horse chestnut (*Aesculus hippocastanum*), Horsetail (*Equisetum arvense*), Jamaica dogwood (*Piscidia erythrina* or *Piscidia piscipula*), Kava (*Piper methysticum*), Kha , Konjac (*Amorphophallus konjac*), Kratom (*Mitragyna speciosa*), Kanna (*Sceletium tortuosum*), Lavender (*Lavandula angustifolia*), Lemon (*Citrus limon*), Licorice root (*Glycyrrhiza glabra*), Marigold (*Calendula officinalis*), Marsh mallow (*Althaea officinalis*), Milk thistle (*Silybum marianum*), Neem (*Azadirachta indica*), Noni (*Morinda citrifolia*), Oregano (*Origanum vulgare*), Papaya (*Carica papaya*), Peppermint (*Mentha x piperita*), Purple coneflower (*Echinacea purpurea*), Passion Flower (*Passiflora*), Red clover (*Trifolium pratense*), Rosemary (*Rosmarinus officinalis*), Sage (*Salvia officinalis*), Syrian Rue (aka Harmal) (P*eganum harmala*), St. John's wort (*Hypericum perforatum*), Saw palmetto (*Serenoa repens*), Thunder God Vine (*Tripterygium wilfordii*), Thyme (*Thymus vulgaris*), Tulasi (*Ocimum tenuiflorum* or Holy Basil), Turmeric (*Curcuma longa*), Umckaloabo (*Pelargonium sidoides*), Valerian (*Valeriana officinalis*), White willow (*Salix alba*), and/or Yerba santa (*Eriodictyon crassifolium*).

As disclosed herein, mixtures of two or more of the above-mentioned culinary, herbal and/or medicinal plants are also included as part of the invention.

In one embodiment of the invention, the plant is tea (*Camellia sinensis*), including white tea, yellow tea, green tea, oolong tea, black tea, and/or pu-erh tea, and the like, including mixtures or blends thereof.

In one embodiment, the wrapping paper comprises a layer of a fibrous plant product, wherein the fibrous plant product comprises a blend of different plants.

In one embodiment, the wrapping paper comprises a plant extract, wherein the plant extract comprises a blend of different plants.

In another embodiment, the wrapping paper comprises a layer of fibrous plant product and a plant extract applied thereto, wherein the fibrous plant product comprises a blend of different plants and the plant extract also comprises a blend of different plants, or wherein the fibrous plant product comprises a single plant and the plant extract comprises a blend of different plants, or wherein the fibrous plant product comprises a blend of different plants and the plant extract comprises a single plant.

In another embodiment of the wrapping paper, the layer of fibrous plant product and the plant extract are from the same plant or from different plants.

In one embodiment of the invention, the layer of fibrous plant product of the wrapping paper comprises at least 70% (w/w), at least 80% (w/w) or at least 90% (w/w) of a fibrous plant product from one plant.

In one embodiment of the invention, the plant extract comprises at least 70% (w/w), at least 80% (w/w) or at least 90% (w/w) of a plant extract from one plant. In another embodiment, the wrapping paper comprises at least 70% of fibrous plant product.

Also described herein is a method for producing the wrapping paper for may comprise wrapping food of the present invention. For example, the method may comprise the steps of:
a) extracting components of at least one plant with a solvent;
b) separating the soluble portion (plant extract) from the non-soluble portion (solid plant particles);
c) optionally refining the non-soluble portion;
d) preparing a sheet-like product from the non-soluble portion;
e) optionally concentrating the soluble portion;
f) applying the soluble portion of step b) or concentrated soluble portion of step e) to the sheet of step d); and
g) drying the product of step f) to obtain the wrapping paper for wrapping food.

One or more plant components (plant material or plant funish) such as, for example, stems, scraps, leaves, fines, dust and/or shorts, may be initially mixed with a solvent (e.g., water and/or other compounds) at elevated temperatures. For example, various solvents that are water-miscible, such as alcohols (e.g., ethanol), can be combined with water to form an aqueous solvent. The water content of the aqueous solvent can, in some instances, be greater than 50% by weight of the solvent. The water content may be 70%, 80%, 90% or 100%. Deionized water, distilled water or tap water may be employed. The amount of the solvent in the suspension can vary widely, but is generally added in an amount from about 75% to about 99% by weight of the suspension. However, the amount of solvent can vary with the nature of the solvent, the temperature at which the extraction is to be carried out, and the type of plant components.

After forming the solvent/plant furnish mixture, some or all of a soluble extracts fraction of the furnish mixture may be optionally separated (e.g., extracted) from the mixture. If desired, the aqueous solvent/plant furnish mixture can be agitated during extraction by stirring, shaking or otherwise mixing the mixture in order to increase the rate of extraction. Typically, extraction is carried out for about 0.5 hours to about 6 hours. Moreover, although not required, typical extraction temperatures range from about 10 °C to about 100 °C.

Prior to the extraction step an optional grinding or cutting step can be used, in order to shred the plant or plant part and thus to break the plant's cell walls.

Once separated from the insoluble residue fraction of the plant solution, the soluble extracts fraction can optionally be concentrated using any known type of concentrator, such as a vacuum evaporator. The soluble component may be highly concentrated. Moreover, the concentrated or unconcentrated soluble extracts fraction can be utilized in any manner desired. For example, the soluble extracts fraction can be utilized as a flavoring material or a portion can be added to the insoluble residue fraction.

Once extracted, the insoluble residue fraction can optionally be subjected to one or more mechanical refiners to produce a fibrous pulp. Some examples of suitable refiners can include disc refiners, conical refiners, and the like. The insoluble residue fraction can be utilized in any manner desired. For example, the insoluble residue fraction can be used as a flavoring material, used to produce a wrapping paper of the invention, which is herein also referred to as reconstituted plant material.

To produce a wrapping paper, the insoluble residue fraction is transferred to a papermaking station. The papermaking station includes a forming apparatus, which may include, for example, a forming wire, gravity drain, suction drain, felt press, Yankee dryer, drum dryers, etc. In general, the insoluble residue fraction may be in the form of a pulp. In the forming apparatus, the pulp is laid onto a wire belt forming a sheet-like shape. Excess water is removed using gravity drains, suction drains, presses, and dryers. Thereafter, if desired, a portion of the soluble extracts fraction may be reapplied to the insoluble residue fraction, either on one side of the insoluble residue fraction or on both sides thereof. When the insoluble residue fraction is recombined with the soluble extracts fraction, the resulting plant product is generally referred to as "reconstituted plant material."

Reconstituted plant material can generally be formed in a variety of ways. For instance, band casting can be utilized to form the reconstituted plant material. Band casting typically employs a slurry of finely divided plant parts mixed with a binder such as gum arabic, guar gum, alginate, xanthan, cellulose and cellulose derivatives (such as carboxy methyl cellulose (CMC), hydroxypropyl methyl cellulose (HPMC)), pectines or starch that is coated onto a steel band and then dried. The method may be performed according to a process similar to the conventional tobacco reconstitution process, which is for example described in U.S. Pat. Nos. 3,353,541; 3,420,241; 3,386,449; 3,760,815; and 4,674,519. The method for producing the products can also be performed by a papermaking process, in order to reconstitute any plant components (such as stems, scraps, leaves, fines, dust and/or shorts) into a paper-like product. Some examples of such processes are described in U.S. Pat. Nos. 3,428,053; 3,415,253; 3,561,451; 3,467,109; 3,483,874; 3,860,012; 3,847,164; 4,182,349; 5,715,844; 5,724,998; and 5,765,570. For example, the formation of the products using papermaking techniques can involve the steps of mixing fruits, herbs, medicinal plants, tea, vegetables and/or spices with water, extracting the soluble ingredients therefrom, concentrating the soluble ingredients, refining the fruits, herbs, medicinal plants, tea, vegetables and/or spices, forming a web, reapplying the concentrated soluble ingredients, drying, and threshing.

In the method described herein, more specifically with respect to the non-soluble portion (solid plant particles) used in providing the non-impregnated fiber web, i.e. the sheet-like product in step d), the plant is not tobacco, wood pulp, cotton, textiles, jute flax, Indian hemp, hemp, hoopvine, kenaf, nettles, ramie, abacá, bamboo fiber, banana (especially banana bark), bowstring hemp, coir (fiber from the coconut shell), esparto, henequen, kapok, milkweed, papaya, phormium ("New Zealand Flax"), sisal, raffia, bagasse, pina, aibika or yucca. However, a mixture of a plant mentioned herein in connection with the present invention with any of the aforementioned plants may be utilized. Further to the foregoing listed materials also others materials can be added to improve product physical characteristics, for example cellulose derivatives such as methylcellulose, carboxymethyl cellulose (CMC), hydroxypropyl methyl cellulose (HPMC), starch and starch derivatives such as oxidatively degraded starch, polysaccharides (and their derivatives) such as pectines, gelatins, guar gum, agar, alginates, carrageenans, or synthetic fibers such as the ones made of vinyl chloride or vinyl acetate, polyethylene, polypropylene, polyesters.

Once extracted, the insoluble, solids portion can optionally be subjected to one or more mechanical refiners to produce a fibrous pulp. Some examples of suitable refiners can include disc refiners, conical refiners, and the like, well known to a skilled person. The pulp from the refiner can then be transferred to a papermaking station (not shown) that includes a forming apparatus, which may include, for example, a forming wire, gravity drain, suction drain, felt press, Yankee dryer, drum dryers, etc. In such a forming apparatus, the pulp is laid onto a wire belt forming a sheet-like shape and excess water is removed by the gravity drain and suction drain and presses. Once separated from the insoluble portion of the plant solution (plant extract), the soluble portion can optionally be concentrated using any known type of concentrator, such as a vacuum evaporator.

A wet strength agent may be added to the fibrous portion in order to reduce potential degradation of the reconstituted material when it is brought into contact with a liquid (e.g. water), such as upon infusion in water. Any suitable wet strength agent preferably selected for food and or baking papers applications may be used such as polyamide-epichlorohydrin resins, polyamine-epichlorohydrin resins, poly(aminoamide)-epichlorohydrin resins, urea-formaldehyde resins ; melamine-formaldehyde resins; alkyl ketene dimer; alkyl succinic anhydride; polyvinylamines; oxidized polysaccharides (such as oxidatively degraded starch); glyoxalated polyacrylamide resins; polyimines such as polyethyleneimine. Wet strength agents are well known to the skilled person and described in Ingredients Standards, such as BFR (Bundesinstitut für Risikobewertung) XXXVI and BFR XXXVI/1 and BFRXXXVI/2 or FDA (Food & Drug Administration) 21 CFR 176.170, FDA 21 CFR 176.110, FDA 21 CFR 176.120, FDA 21 CFR 176.1180. The wet strength agent is for example used in an amount of about 0.1 % w/w to about 20 % w/w, preferably of about 1 % w/w to about 10 % w/w, more preferably of about 5% w/w. The wet strength agent is preferably added to the fibrous portion when or before making the sheet-like product (see step d) above).

The water used for extraction may be hot water, preferably of about 30 to 100 °C, 40 to 90 °C, or 50 to 80 °C, or more preferably of about 70 °C.

The coating ratio of solubles portion onto the fiber web may be about 5% to 80% (w/w), 10 to 70% (w/w), or more preferably between 20 and 50% (w/w). The coating ratio or soluble portion that may be added back to the base web (fiber web) is similar to the portion of soluble material contained in and extracted from the original plant (so called "standard level").

The base weight of the final product may be adjusted during the preparation process, so that it is suitable for the intended purpose. For example, in one embodiment, the base weight of the final product may be between about 20 to about 300 g/m² (dry basis), more preferably between about 70 g/m² to about 300 g/m². In one further embodiment, the base weight of the final product may be between about 90 to about 150 g/m², such as for example between about 90 to about 120 g/m².

The extraction time depends on the fruits, herbs, medicinal plants, tea, vegetables and/or spices subjected to the extraction process. The extraction time may be about 15 to 60 minutes, preferably 45 minutes.

In the method described herein, the extracting step may be performed using components of a blend of plants, or the, extracting step may be performed using components of a single plant.

Extraction may also be performed by means other than using hot water, namely by extraction with supercritical gases, such as carbon dioxide, or by using, for example, ethanol, hexane, acetone, R134a (1,1,1,2-tetrafluoroctbane), carbon dioxide and hydrofluorocarbons. The extraction can be carried out by using at least one solvent at room temperature and under atmospheric pressure. Extraction may also be performed by using a mixture of different solvents. Extraction may be performed using at least one solvent, such as for example R134a or carbon dioxide, at different temperatures and at different pressures and different states (liquid or gaseous). For example, extraction may be performed using solvents in a liquid state (such as solvent that are volatile or non-volatile at room temperature), in a subcritical state (such as water at a temperature above 100°C and a pressure above 1 bar), or in a supercritical state (such as carbon dioxide at a temperature above 31 °C and a pressure above 73 bar).

Certain plants may require specific extraction conditions (time, temperature, solid/liquid ratio) due to the ingredients contained therein, which may be temperature sensitive or must not be subjected to certain extraction conditions. For example, extraction of lycopene from tomatoes we must be performed by using specific enzymes to liberate the product from tomatoes cells.

Processing aids may be used to improve extraction, such as pH modifiers (such as, for example, NaOH or organic acids), microwaves, pressure, ultrasound, enzymes such as for example proteases, amylases, cellulases, and/or pectinases. Whenever reference is made herein to "extraction", the term includes the aforementioned alternative extraction means. The extraction used can be performed in a continuous or discontinuous matter. The extraction conditions are well known to the skilled artisan and described in standard text books, such as Handbook of Separation Techniques for Chemical Engineers, Third Edition (March 1997), Philip A. Schweitzer, McGraw-Hill Inc.

The extraction and/or pressing may be performed using at least a portion of the plant material, fresh, frozen or dried, or selected from roots, bark, seeds, stems, leaves, flowers and fruit.

Separation of the soluble portion (plant extract) from the non-soluble portion (solid plant particles) can be performed by separating the liquid phase from the solid phase, such as by filtration, with or without pressure, by centrifugation or other methods commonly used in the laboratory and well-known to the skilled person.

In the method described herein where a mixture or blend of plants is used, the non-soluble portion of the plant is mixed with the non-soluble portion of at least one further plant prior to preparing the sheet.

The method described herein may use the soluble portion of step b) or concentrated soluble portion of step e), which is mixed with the soluble portion or concentrated soluble portion of at least one further plant prior to applying the soluble portion or concentrated soluble portion to the sheet.

For certain applications it is desirable to adjust the composition by adding or removing ingredients or components to or from the plant extract and/or the non-soluble plant particles prior to producing the final product of the invention. Such adjustment may be performed to modify/improve chemical, physical and/or sensory characteristics of the finished product.

Described herein are also methods, further comprising the step of adding or removing ingredients from the soluble portion (plant extract) and/or from the non-soluble portion (solid plant particles) prior to applying the soluble portion of step b) or concentrated soluble portion of step e) to the sheet of step d).

The sheet or sheet-like product which is obtained in step g) may be provided as a web or fiber-web. The sheet-like product or web may be used in different sizes and shapes. For example, the web or fiber-web may be rolled up on a rell or spool so that the user may unroll the necessary size of the web or fiber-web and cut it into any suitable size. In some cases, the composition of step g) is further cut or broken into small regularly or irregularly shaped forms. Alternatively, the composition is brought or formed into any desired shapes, dimensions and formats, such as sheets, leafs (or leaf-like shapes), sticks, bands, cups, mugs, bags, papillotes, bowls, flasks, kettles, bottles or the like, straws or tubes, discs or sheets and the like. The wrapping paper may be in the form of sheets, foils, bags, as a box and/or papillote.

In addition to cutting or breaking the sheet or fibrous web to a desired size and/or shape or forming the same into to a desired size and/or shape, it may be dried to the desired final moisture content.

For example, the wrapping paper may be provided in single sheets having an area from about 0.1 m² to about 0.3 m², such as from about 0.1 m² to about 0.25 m² or about 0.1 m² to about 0.2 m². The single sheets may have a size according to ISO 216, such as A4 or A5.

The wrapping paper may be provided in the form of a cardboard, such as for example a corrugated cardboard. The thickness of such cardboards may be adjusted during the preparation step. The wrapping paper in the form of a cardboard may be provided in any forms and sizes. For example, the cardboard may be foldable to a particular body into which food may be placed. For example, the cardboard may be folded to a box, a case, a cylinder, and the like.

In accordance with the present invention the plant is selected from the group consisting of fruits, herbs, medicinal plants, tea, vegetables and spices, including mixtures thereof, such as mixtures of herbs and vegetables. In one embodiment, the fruits, herbs, medicinal plants, tea, vegetables and spices are for example selected from artemisia, balm, basil, chamomile, chive, cinnamon, cloves, coffee, coriander, dill, fennel, garlic, ginger, ginseng, gingko, jasmine, laurel, lavender, mint, orange blossom, oregano, persil, rooibos, rosa centifolia, rosemary, thyme, turmeric, sage, pepper, chili pepper, stevia rebaudiana, tarragon, white tea, yellow tea, green tea, oolong tea, black tea, pu-erh tea, vanilla, red or green vine, violet and/or willow.

In some embodiments of the invention, the plant or mixture of plants is selected from the list described above.

Also described herein is a fiber-web comprising from about 5% to about 100% (w/w)), preferably at least 10%, at least 20%, at least 30%, at least 40%, at least 50%, at least 60%, at least 70%, at least 80%, at least 90%, or 100%, fibers of fruits, herbs, medicinal plants, tea, vegetables and/or spices. The fiber-web may further comprises cellulosic and/or synthetic fibers, and fibers of fruits, herbs, medicinal plants, tea, vegetables and/or spices in a ratio of for example: 40/60 (w/w), 60/40 (w/w), 80/20 (w/w) or 20/80 (w/w).

The fiber-web may be obtainable by the method described herein, namely as an intermediate product in step d) or step g) of the said method.

The fiber-web may further comprises a coating or impregnation with soluble portion (plant extract) of vegetables, fruits, herbs, medicinal plants, or tea. The coating or impregnation is obtained by various methods known to the skilled person, such as applying to or treating the fiber-web or sheet-like structure with a plant extract, such as in a bath or by special application means, such as sprayers. In addition, various other ingredients, such as flavor or color treatments, can also be applied to the web. If applied with the soluble portion and/or other ingredients, the fibrous sheet material can, then be dried using, for example, a tunnel dryer, to provide a sheet having a typical moisture content of less than 20% by weight, and particularly from about 9% to about 14% by weight. The coating or impregnation of the fiber-web, i.e. wrapping paper, may be done on one side or on both sides thereof.

Thus, also described herein is an impregnated or coated fiber-web, obtainable by the method described herein, namely in step g).

In one embodiment the present invention is directed to use of the wrapping paper for treating food. Treating in the sense of the present invention means any contact between the wrapping paper and food. For example, treating food involves wrapping, covering or packing the food with the wrapping paper, but is not limited to. In one embodiment, "covering" describes a less tighten wrapping, such as simply covering the food with the wrapping paper or putting the food on the wrapping paper. An example for such a covering or simple putting the food thereon is, but is not limited to, the use as conventional baking paper, which generally has only contact to one side of the food which is lying directly on the baking paper.

During the treating process the food may be flavored, as will be explained in more detail below. Thus, one further embodiment of the present invention is directed to the use of the wrapping paper for flavoring food. "Flavoring" in the sense of the present invention means transferring or providing a specific aroma, flavor and/or taste to the food which is treated with the wrapping paper. The flavoring process will generally take place in a way described below for wrapping the food with the wrapping paper.

The invention specifically relates to the use of a wrapping paper for wrapping food. The term "wrapping paper" in the sense of the present invention includes any forms of the paper and any uses thereof suitable to flavor food. For example, the wrapping paper may be used as a conventional baking paper as explained above or to slightly and/or tightly be wrapped around food or may be provided in the form of a bag, papillote or box or any other suitable form as described below. When used as a bag, papillote or box the food may be placed within the bag, papillote or box. Generally, there is no limitation in which way the wrapping paper may be used, i.e. in folded or unfolded manner, or for what flavoring purpose.

In one embodiment of the invention the wrapping paper is used to release and/or transfer aroma, flavor and/or taste from fruits, herbs, medicinal plants, tea, vegetables and/or spices to the food that is wrapped with it. This is done in order to provide a specific aroma, flavor and/or taste to the food which supports and/or changes the natural taste or flavor of the food. The wrapping paper serves as a carrier of the respective aroma, flavor and/or taste (as explained above) and transfers the same to the food wrapped with the inventive wrapping paper. The transfer of the aroma, flavor and/or taste is effected either by direct contact of the wrapping paper and the food without any further processing or additionally by further processing of the wrapped food, for example by cooking, frying, roasting, barbecuing, baking the wrapped food, or the like. In the sense of the present invention, "without further processing" means that the wrapping paper is wrapped around the food and stored for a specific period of time.

In one further embodiment of the present invention, different wrapping papers are used at the same time to wrap the food in order to provide different aromas and/or tastes to the food. As already explained above, it is also possible that the wrapping paper as such combines different flavors depending on the respective preparation process. The specific combination of flavors may be adjusted depending on the food which should be wrapped and thus flavored.

In another embodiment of the present invention, in addition to the flavoring purposes, the wrapping paper may also be used in order to change the color of the food. The coloring characteristics depend on the materials used in the wrapping paper, i.e. the fibrous plant product and the plant extract applied thereto. Also, the original color of the food influences the final color of the food processed with the wrapping paper. It is also possible to obtain different colors for the food in case different wrapping papers are used at the same time in the wrapping process.

Generally, any kind of food which should have an altered or improved aroma, flavor and/or taste may be wrapped with the inventive wrapping paper. For example, the food which may be wrapped with the inventive wrapping paper may be selected from meat, fish, cheese, bakery products, insects, vegetables, fruits, or the like.

In one embodiment of the invention, meat may be selected from any kind of meat which is eaten in the respective region of the world. For example, meat may be selected from beef, pork, chicken, lamb, sheep, moose, reindeer, elk, turkey, vension, rabbit, duck, goose, ostrich, and/or horse, but is not limited to. The meat may be used in any suitable form, such as, but not limited to, in slices, in sausage form, cut into small pieces, as roast, or the like.

In one embodiment of the invention fish may be selected from any kind of food fish, such as, but not limited to, basa, flounder, hake, scup, smelt, trout, rainbow trout, hardshell clam, blue crab, peekytoe carb, spanner carb, cuttlefish, eastern oyster, Pacific oyster, anchovy, herring, lingcod, moi, orange roughy, Atlantic ocean perch, Lake Victoria perch, yellow perch, European oyster, sea urchin, mackerel, sea bass, hybrid striped bass, bream, cod, drum, haddock, hoki, Pollock, rockfish, salmon, snapper, tilapia, turbot, walleye, lake whitefish, cockle, bay scallop, shrimp, sablefish, skate, mussels, arctic char, carp, catfish, dory, grouper, halibut, monkfish, pompano, Dover sole, sturgeon, tilefish, wahoo, yellowtail, Abalone, conch, octopus, barramundi, cusk, dogfish, kinfklip, mahimahi, opah, mako shark, swordfish, tuna, barracuda, bass, cobia, croaker, eel, blue marlin, mullet, sockeye salmon, and the like.

In one embodiment of the invention cheese may be selected from any kind of cheese made from the milk of cows, buffalo, goats or sheeps. Examples of cheese are, but not limited to, camembert, gouda, edamer, feta, brie, cheddar, manchego, provolone, stilton, cream cheese, and the like.

In one embodiment of the invention a bakery product may be selected from sweet or salty bakery products. Examples of such bakery products are, but are not limited to, bread, pretzel, biscuit, cake, waffle, and the like.

In one embodiment of the invention vegetables may be selected from, but not limited to, Amaranth (*Amaranthus cruentus*), Arugula (*Eruca sativa*), Beet greens (*Beta vulgaris* subsp. *vulgaris*), Bok choy ( 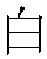 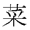 *Brassica rapa* Chinensis group), Borage greens (*Borago officinalis*), Broccoli Rabe (*Brassica rapa* subsp. *rapa*), Brussels sprout (*Brassica oleracea* Gemmifera group), Cabbage (*Brassica oleracea* Capitata group), Catsear (*Hypochaeris radicata*), Celery (*Apium graveolens*), Celtuce (*Lactuca sativa* var. *asparagina*), Chaya (*Cnidoscolus aconitifolius* subsp. *aconitifolius*), Chickweed (*Stellaria*), Chicory (*Cichorium intybus*), Chinese mallow (*Malva verticillata*), Chrysanthemum leaves (*Chrysanthemum coronarium*), Collard greens (*Brassica oleracea*), Common Purslane (*Portulaca oleracea*), Corn salad (*Valerianella locusta*), Cress (*Lepidium sativum*), Dandelion (*Taraxacum officinale*), Dill (*Anethum graveolens*), Endive (*Cichorium endivia*), Fat hen (*Chenopodium album*), Fiddlehead (*Pteridium aquilinum, Athyrium esculentum*), Fluted pumpkin (*Telfairia occidentalis*), Garden Rocket *(Eruca sativa),* Golden samphire (*Inula crithmoides*), Good King Henry (*Chenopodium bonus-henricus*), Greater Plantain (*Plantago major*), Kai-lan (Gai Lan 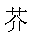 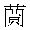 *Brassica rapa* Alboglabra group), Kale (*Brassica oleracea* Acephala group), Komatsuna (*Brassica rapa* Pervidis or Komatsuna group), Kuka (*Adansonia* spp.), Lagos bologi (*Talinum fruticosum*), Lamb's lettuce (*Valerianella locusta*), Lamb's Quarters (*Chenopodium album*), Land cress (*Barbarea verna*), Lettuce (*Lactuca sativa*), Lizard's tail (*Houttuynia cordata*), Malabar Spinach (*Basella alba*), Melokhia (*Corchorus olitorius, Corchorus capsularis*), Miner's Lettuce, Mizuna greens *(Brassica rapa* Nipposinica group), Mustard (*Sinapis alba*), Napa cabbage (Siu Choi 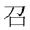 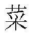 *Brassica rapa* Pekinensis group), New Zealand Spinach (*Tetragonia tetragonioides*), Orache (*Atriplex hortensis*), Pak choy (Bok Choy 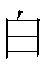 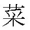 *Brassica rapa* Chinensis group), Paracress (*Acmella oleracea*), Pea sprouts/leaves (*Pisum sativum*), Poke (*Phytolacca americana*), Radicchio (*Cichorium intybus*), Samphire (*Crithmum maritimum*), Sculpit/Stridolo (*Silene inflata*), Sea beet *(Beta vulgaris* subsp. *maritima*), Sea kale (*Crambe maritima*), Sierra Leone bologi *(Crassocephalum* spp.), Soko (*Celosia argentea*), Sorrel (*Rumex acetosa*), Spinach *(Spinacia oleracea*), Summer purslane (*Portulaca oleracea*), Swiss chard (*Beta vulgaris* subsp. *cicla* var. *flavescens*), Tatsoi *(Brassica rapa* Rosularis group), Turnip greens *(Brassica rapa* Rapifera group), Watercress (*Nasturtium officinale*), Water spinach (*Ipomoea aquatica*), Wheatgrass (*Triticum aestivum*), Winter purslane (*Claytonia perfoliata*), Yarrow (*Achillea millefolium*), Yao Choy (Yu Choy, Rape, 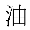 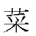 *Brassica napus*), Avocado (*Persea americana*), Bell pepper *(Capsicum annuum*), Bitter melon/Bitter gourd (*Momordica charantia*), Chayote (*Sechium edule*), Cucumber (*Cucumis sativus*), Ivy Gourd (*Coccinia grandis*), Eggplant/Aubergine/Brinjal (*Solanum melongena*), Luffa (*Luffa cylindrica*), Olive fruit (*Olea europaea*), Pumpkin (*Cucurbita* spp.), Squash (*Cucurbita* spp.), Sweet corn aka corn; aka maize (*Zea mays*), Sweet pepper (*Capsicum annuum* Grossum group), Tinda (*Praecitrullus fistulosus*), Tomatillo (*Physalis philadelphica*), Tomato (*Solanum lycopersicum var*), Vanilla (*Vanilla* spp.), West Indian gherkin (*Cucumis anguria*), Winter melon (*Benincasa hispida*), Zucchini/Courgette (*Cucurbita pepo*), Artichoke (*Cynara cardunculus*, *C. scolymus*), Broccoli (*Brassica oleracea*), Caper (*Capparis spinosa*), Cauliflower (*Brassica oleracea*), Courgette flowers (*Cucurbita* spp.), Squash blossoms *(Cucurbita* spp.), American groundnut (*Apios americana*), Azuki bean (*Vigna angularis*), Black-eyed pea (*Vigna unguiculata subsp.unguiculata*), Chickpea (*Cicer arietinum*), Common bean (*Phaseolus vulgaris*), Drumstick (*Moringa oleifera*), Dolichos bean (*Lablab purpureus*), Fava bean (*Vicia faba*), Garbanzo (*Cicer arietinum*), Green bean (*Phaseolus vulgaris*), Guar (*Cyamopsis tetragonoloba*), Horse gram (*Macrotyloma uniflorum*), Indian pea (*Lathyrus sativus*), Lentil (*Lens culinaris*), Lima Bean (*Phaseolus lunatus*), Moth bean (*Vigna acontifolia*), Mung bean (*Vigna radiata*), Okra (*Abelmoschus esculentus*), Pea (*Pisum sativum*), Peanut (*Arachis hypogaea*), Pigeon pea (*Cajanus cajan*), Ricebean (*Vigna umbellata*), Runner bean (*Phaseolus coccineus*), Snap pea (*Pisum sativum* var. *macrocarpon*), Snow pea *(Pisum sativum* var. *saccharatum*), Soybean (*Glycine max*), Tarwi (tarhui, chocho; *Lupinus mutabilis*), Tepary bean (*Phaseolus acutifolius*), Urad bean (*Vigna mungo*), Velvet bean (*illucunapruriens*), Winged bean (*Psophocarpus tetragonolobus*), Yardlong bean (*Vigna unguiculata* subsp. *sesquipedalis*), Asparagus (*Asparagus officinalis*), Cardoon (*Cynara cardunculus*), Celeriac (*Apium graveolens* var. *rapaceum*), Celery (*Apium graveolens*), Chives (*Allium schoenoprasum*), Elephant Garlic (*Allium ampeloprasum var.ampeloprasum*), Florence fennel (*Foeniculum vulgare* var. *ulce*),, Garlic (*Allium sativum*), Garlic Chives (*Allium tuberosum*), Kohlrabi (*Brassica oleracea* Gongylodes group), Kurrat (*Allium ampeloprasum* var. *kurrat*), Lemongrass (*Cymbopogon citratus*), Leek (*Allium porrum*), Lotus root (*Nelumbo nucifera*), Nopal (*Opuntia ficus-indica*), Onion (*Allium cepa*), Pearl onion (*A. ampeloprasum var. sectivum or A. ampeloprasum 'Pearl-Onion Group*), Potato onion (*Aggregatunt group' of Allium cepa*), Prussian asparagus (*Ornithogalum pyrenaicum*), Spring Onion/Scallion (*Allium wakegi*), Shallot (*Allium cepa* Aggregatum group), Tree onion (*Allium proliferum*), Welsh onion (*Allium fistulosum*), Wild leek (*Allium tricoccum*),, Ahipa (*Pachyrhizus ahipa*), Arracacha (*Arracacia xanthorrhiza*), Bamboo shoot (*Bambusa vulgaris* and *Phyllostachys edulis*), Beetroot *(Beta vulgaris* subsp. *vulgaris*), Burdock (*Arctium lappa*), Broadleaf arrowhead (*Sagittaria latifolia*), Camas (*Camassia*), Canna (*Canna* spp.), Carrot (*Daucus carota*), Cassava (*Manihot esculenta*), Chinese artichoke (*Stachys affinis*), Daikon (*Raphanus sativus* Longipinnatus group), Earthnut pea (*Lathyrus tuberosus*), Elephant Foot yam *Amorphophallus_paeoniifolius*), Ensete (*Ensete ventricosum*), Galangal (*Alpinia galanga*), Ginger (*Zingiber officinale*), Hamburg parsley *(Petroselinum crispum var.tuberosum*), Horseradish (*Armoracia rusticana*), Jerusalem artichoke (*Helianthus tuberosus*), Jicama (*Pachyrhizus erosus*), Mashua (*Tropaeolum tuberosum*), Parsnip (*Pastinaca sativa*), Pignut (*Conopodium majus*), Potato (*Solanum tuberosum*), Prairie turnip (*Psoralea esculenta*), Radish (*Raphanus sativus*), Rutabaga (*Brassica napus* Napobrassica group), Salsify (*Tragopogon porrifolius*), Scorzonera (*Scorzonera hispanica*), Skirret (*Sium sisarum*), Swede (*Brassica napus* Napobrassica group), Sweet Potato or Kumara (*Ipomoea batatas*), Taro (*Colocasia esculenta*), Ti (*Cordyline fruticosa*), Tigernut (*Cyperus esculentus*), Turmeric (*Curcuma longa*), Turnip (*Brassica rapa* Rapifera group), Ulluco (*Ullucus tuberosus*), Wasabi (*Wasabia japonica*), Water caltrop (*Trapa natans*) or (*Trapa bicornis*), Water chestnut (*Eleocharis dulcis*), Yacon (*Smallanthus sonchifolius*), Yam (*Dioscorea* spp.),Aonori (*Monostroma* spp., *Enteromorpha* spp.), Arame (*Eisenia bicyclis*), Carola (*Callophyllis variegata*), Dabberlocks or badderlocks (*Alaria esculenta*), Dulse or dillisk (*Palmaria palmata*), *Hijiki* (*Hizikia fusiformis*), *Kombu* (*Laminaria japonica*), Laver (or *gim*) (*Porphyra* spp.), *Mozuku* (*Cladosiphon okamuranus*), *Nori* (*Porphyra* spp.), *Ogonori* (*Gracilaria* spp.), Sea grape (*Caulerpa* spp.), Sea lettuce (*Ulva lactuca*), *Wakame* (*Undariapinnatifida*).

In one embodiment of the invention fruits may be selected from Abiu (*Pouteria caimito*; Sapotaceae), Açaí (*Euterpe oleracea*; Arecaceae), or Assai, Acerola (*Malpighia glabra*; Malpighiaceae), Ackee (*Blighia sapida* or *Cupania sapida*; Sapindaceae), African cherry orange (*Citropsis articulata*; Rutaceae), African mango (*Irvingia gabonensis*), African moringa (*Moringa stenopetala*; Moringaceae), Ambarella (*Spondias dulcis*; Anacardiaceae), American Black Elderberry (*Sambucus canadensis*; Adoxaceae), American Chestnut (*Castanea dentata*; Fagaceae), American grape: North American species (e.g., *Vitis labrusca*;,*itaceae*) and American-European hybrids are grown where grape, Vitis *vinifera*), American Hazelnut (*Corylus americana;* Betulaceae), American Pawpaw (*Asimina triloba*; Annonaceae), Avocado (*Persea americana*; Lauraceae), American plum (*Prunus americana*; Rosaceae), American Red Elderberry (*Sambucus pubens*; Adoxaceae), American Red Raspberry (*Rubus strigosus*; Rosaceae), Apple and crabapple (*Malus*), Apple, cus, Apricot (*Prunus armeniaca* or *Armeniaca vulgaris*), Araza (*Eugenia stipitata*), Arhat (*Siraitia grosvenorii*; Cucurbitaceae),, Atemoya (*Annona cherimola* × *Annona squamosa*; Annonaceae), Atherton Raspberry (*Rubus probus*; Rosaceae), Avocado (*Persea americana*; Lauraceae), Babaco (*Carica pentagona*; Caricaceae), Bacupari (*Garcinia gardneriana*), Bacuri (*Platonia esculenta*; Guttiferae), Bael, or Woodapple (*Aegle marmelos*; Rutaceae), Banana (*Musacea* spp.; Musaceae, Barbadine (granadilla; maracujá-açu in Portuguese), Batuan (*Garcinia morella*), Beach Plum (*Prunus maritima*; Rosaceae), Bearberry (*Arctostaphylos* spp.), Betel Nut ("Areca catechu"; Arecaceae), Bignay (*Antidesma bunius*; Euphorbiaceae), Bilberry or whortleberry (*Vaccinium* spp.), Bilimbi (*Averrhoa bilimbi*; Oxalidaceae) Biriba (*Rollinia deliciosa*; Annonaceae), Bitter melon, Black Apple (*Planchonella australis*; Sapotaceae), Black cherry (*Prunus serotina*; Rosaceae), Black raspberry (*Rubus occidentalis* or *Rubus leucodermis*; Rosaceae), Black Mulberry (*Morus nigra*; Moraceae), Black Sapote (*Diospyros digyna*), Black Walnut (*Juglans nigra*; Juglandaceae), Blackberry, Blood Orange, Blue tongue (*Melastoma affine*; Melastomataceae), Blueberry (*Vaccinium*, *sect. Cyanococcus*; Ericaceae), Bolivian coconut (*Parajubaea torallyi*), Bolwarra (*Eupomatia laurina*; Eupomatiaceae), Boquila (*Boquila trifoliata* ; Lardizabalaceae), Bottle Gourd (*Lagenaria siceraria*; Cucurbitaceae), Brazilian Guava (*Psidium guineense*; Myrtaceae), Breadnut (*Artocarpus camansi*; Moraceae), Breadnut, Mayan, see Mayan breadnut, Broad-leaf Bramble (*Rubus moluccanus*; Rosaceae), Brazilian Guava (*Psidium guineense*; Myrtaceae), Brush cherry (*Syzygium australe*; Myrtaceae), Buddha's Hand, Buffaloberry ("Shepherdia argentea"; Elaeagnaceae), Burdekin Plum (*Pleiogynium timorense*; Anacardiaceae), Burmese grape, or Latka (*Baccaurea sapida*; Phyllanthaceae), Bush tomato (Certain *Solanum* species; Solanaceae), Button Mangosteen (*Garcinia prainiana*), Caimito (*Chrysophyllum_cainito*; Sapotaceae), Calabash Tree (*Crescentia cujete*), Calamondin (*Citrofortunella Microcarpa*), Calamansi (×*Citrofortunella Mitis*)), CamuCamu (*Myrciaria dubia*; Myrtaceae), Canary melon, Canistel (*Pouteria campechiana*; Sapotaceae), Cantaloupe, Cape Gooseberry (*Physalis peruviana*; Solanaceae), Capuli cherry (*Prunus salicifolia*, *Prunus capuli* or *Prunus serotina subsp. capuli);* Rosaceae), Carambola (*Averrhoa carambola*; Oxalidaceae), Cardón (*Pachycereus pringlei*; Cactaceae), Carob (*Ceratonia siliqua*; Fabaceae), Cashew apple (*Anacardium occidentale*), Cassabanana (*Sicana odorifera*; Cucurbitaceae), Cattley Guava (*Psidium cattleianum*; Myrtaceae), Cawesh (*Annona scleroderma*; Annonaceae), Cedar Bay cherry (*Eugenia carissoides*; Myrtaceae), Ceriman (*Movers deliciosa*; Araceae), Cereus peruvianus, Ceylon gooseberry (*Dovyalis hebecarpa*; Flacourtiaceae, Charichuelo (*Garcinia intermedia*), Chayote (*Sechium edule*; Cucurbitaceae), Che (*Cudrania tricuspidata*; Moraceae), Chempedak or Champedak (*Artocarpus integer*; Moraceae), Chenet (guinep or ackee; pitomba-das-Guinas in Portuguese), Cherimoya (*Annona cherimola*; Annonaceae), Cherry, sweet, black, sour, and wild species (*Prunus avium*, *Prunus serotina*, *Prunus cerasus,* and others), Cherry ballart (*Exocarpus cupressiformis*; Santalaceae), Cherry of the Rio Grande (*Eugenia aggregata*; Myrtaceae), Chilean guava (*Psidium cattleianum*; see also ugni (Myrtaceae), Chinese jujube (*Ziziphus zizyphus*; Rhamnaceae), Chinese Olive (*Canarium album*; Burseraceae), Chinese Quince (*Pseudocydonia sinensis*), Chokeberry (*Aronia*), Chokecherry (*Prunus virginiana*), Chupa-Chupa (*Quararibea cordata*; Malvaceae), Citron (*Citrus medica*), Clementine (*Citrus reticulata* var. *clementine*), Cloudberry (*Rubus chamaemorus*), Cluster fig (*Ficus racemosa*; Moraceae), Cocky apple (*Planchonia careya*), Coco Plum (*Chrysobalanus icaco*; Chrysobalanaceae), Cocona (*Solanum sessilifolium*; Solanaceae), Coconut (*Cocos nucifera*; Arecaceae), Cocoplum (*Chrysobalanus icaco*; Chrysobalanaceae), Coffee, Cola nut (*Cola acuminata*; Sterculiaceae), Common apple-berry (*Billardiera scandens*; Pittosporaceae), Conkerberry (*Carissa lanceolata*; Apocynaceae), Cornelian cherry (*Cornus mas*; Cornaceae), Costa Rican Guava (*Psidium friedrichsthalianum*; Myrtaceae), Cranberry (*Vaccinium* spp.), Crowberry (*Empetrum* spp.), Cupuaçu (*Theobroma grandiflorum*; Malvaceae), Currant (*Ribes* spp.; Grossulariaceae), red, black, and white types, Curry-leaf Tree (*Murraya koenigii*; Rutaceae), Custard Apple (*Annona reticulata*; Annonaceae), also called *Bullock's Heart*, Damson plum (*Prunus domestica subsp. insititia*; Rosaceae), Date (*Phoenix dactylifera*; Arecaceae), Date plum (*Diospyros lotus*; Ebenaceae), Davidson's plum (*Davidsonia* spp.; Cunoniaceae) Davidsonia jerseyana Davidsonia johnsonii Davidsonia pruriens, Dead Man's Fingers(*Blue Bean, Blue Sausage Fruit,Decaisnea fargesii*), Desert banana (*Marsdenia australis*), Desert fig (*Ficus platypoda*; Moraceae), Desert lime (*Citrus glauca*; Rutaceae), Dodder laurel (*Cassytha melantha*), Doubah (*Marsdenia australis*; Apocynaceae), Double Coconut or Coco-de-*mer*(*Lodoicea maldivica*; Arecaceae), Dragonfruit / Pitaya (*Hylocereus* spp.; Cactaceae), Duku (*Lansium domesticum*; Meliaceae), Durian (*Durio zibethicus*; Eastern May Hawthorn (*Crataegus aestivalis*; Rosaceae, better known as mayhaw.), Elderberry (*Sambucus*; Caprifoliaceae), Elephant Apple (*Dillenia indica*; Dilleniaceae or *Limonia acidissima*; Rutaceae), Emu Apple (*Owenia acidula*; Meliaceae), Emu berry (*Grewia retusifolia*), Falberry (*Vaccinium* spp.), False-mastic (*Sideroxylon foetidissimum*; Sapotaceae), Fibrous Satinash (*Syzygium fibrosum*; Myrtaceae), Fig (*Ficus* spp. Moraceae), Finger Lime (*Citrus australasica*; Rutaceae), Florida strangler fig (*Ficus aurea*; Moraceae), Forest strawberries, Fragaria vesca Malvaceae), Gac, Galia melon, Gambooge (*Garcinia cambogia*; Clusiaceae), Genip (*Melicoccus bijugatus*; Sapindaceae), Giant Colombian blackberry (*Rubus macrocarpus*), Giant Granadilla (*Passiflora quadrangularis*; Passifloraceae), Gooseberry (*Ribes* spp.; Grossulariaceae), Goumi (*Elaeagnus multiflora*; Elaeocarpaceae), Governor's Plum (*Flacourtia indica*; Flacourtiaceae), Grape, called raisin, sultana when it is dried. (*Vitis* spp.; Vitaceae), Grapefruit (*Citrus* × *paradisi*; Rutaceae), Greengage, a cultivar of the plum, Ground Plum (*Astragalus crassicarpus*; Fabaceae), Grumichama (*Eugenia brasiliensis*; Myrtaceae), Guanabana (*Annona muricata*; Annonaceae), Guarana (*Paullinia cupana*; Sapindaceae), Guava (*Psidium guajava*; Myrtaceae), Guavaberry/Rumberry; (*Myrciaria floribunda*; Myrtaceae), Hackberry (*Celtis* spp.; Cannabaceae), Hairless rambutan, Hardy Kiwi (*Actinidia arguta*; Actinidiaceae family), Hawthorn (*Crataegus* and *Rhaphiolepis*), Hog Plum (taperebá in Portuguese), Honeydew, Honeysuckle, Horned melon (*Cucumis metuliferus*; Cucurbitaceae), Huckleberry (*Vaccinium* spp.), Huito (*Genipa americana*; Rubiaceae, Ice Cream Bean (*Inga edulis*), llama (*Annona diversifolia*; Annonaceae), Illawarra Plum (*Podocarpus elatus*; Podocarpaceae), Imbe (*Garcinia livingstonei*), Indian almond, Indian fig, Indian gooseberry (*Phyllanthus emblica*/*Emblica officinalis*; Euphorbiaceae), Indian jujube (*Ziziphus mauritiana*; Rhamnaceae), Indian prune (*Flacourtia rukan*; Flacourtiaceae), Jabuticaba (*Myrciaria cauliflora*; Myrtaceae), Jackfruit (*Artocarpus heterophyllus* Moraceae), Jambul (*Syzygium cumini*; Myrtaceae), Japanese Persimmon, or Sharon fruit (*Diospyros kaki*; Ebenaceae), Jatobá (*Hymenae coubaril*; Leguminosae) Caesalpinioideae), Jelly Palm (*Butia capitata*), Jocote, Jujube (*Ziziphus zizyphus*; Rhamnaceae), Juniper berry (*Juniperus* spp.), Kabosu (*Citrus Sphaerocarpa*) Rutaceae, Kaffir lime (*Citrus hystix*), Kahikatea (*Dacrycarpus dacrydioides*), Kakadu lime (*Citrus gracilis*; Rutaceae), Kakadu plum (*Terminalia ferdinandiana*; Combretaceae), Kandis (*Garcinia forbesii*; Clusiaceae), Kapok (*Ceiba pentandra*; Bombacaceae), Karkalla (*Carpobrotus rossii*; Aizoaceae), Karonda (*Carissa carandas*; Apocynaceae), Kei apple (*Dovyalis caffra*; Flacourtiaceae), Kepel fruit (*Stelechocarpus burahol*; Annonaceae), Keule (*Gomortega keule*; Gomortegaceae), Key Lime (*Citrus aurantifolia*), Kitembilla (*Dovyalis hebecarpa*; Flacourtiaceae), Kiwifruit (*Actinida spp*.; Actinidiaceae), Korlan, Kumquat (*Fortunella spp.*), Kundong (*Garcinia sp*.; Clusiaceae), Kutjera (*Solanum centrale*; Solanaceae), Kwai Muk *(Artocarpus hypargyraea*; Moraceae), Lady apple (*Syzygium suborbiculare*; Myrtaceae), Lakoocha (*Artocarpus lakoocha*; Moraceae), Langsat (*Lansium domesticum*), Lanzones (*Lansium domesticum*; Meliaceae), Lapsi (*Choerospondias axillaris Roxb.* Anacardiaceae), Lardizabala (*Lardizabala biternata*; ardizabalaceae), Lemon (*Citrus limon*), Lemon aspen (*Acronychia acidula*; Rutaceae), Leucaena, Lillypilly (*Acmena* spp., *Syzygium* spp.), Little gooseberry tree (*Buchanania arborescens*; Anacardiaceae), Lime, Limeberry (*Trifasia trifolia*; Rutaceae), Limequat (*Citrus aurantifolia* × *Fortunella spp*.; Rutaceae), Lingonberry (*Vaccinium vitis-idaea*), Loganberry (*Rubus loganobaccus*), Longan (*Dimocarpus longan* or *Euphoria longana*; Sapindaceae), Loquat (*Eriobotrya japonica*; Rosaceae), Louvi (*Flacourtia inermis*; Flacourtaceae), Lúcuma (*Pouteria campechiana*; Sapotaceae), Lychee (*Litchi chinensis*; Sapindaceae), Ma-praang (*Bouea macrophylla*; Anacardiaceae), Mabolo (*Diospyros discolor*; Ebenaceae), Macadamia (*Macadamia integrifolia*; Proteaceae), Madrono (*Rheedia acuminata*; Guttiferae), Malabar plum (*Syzygium jambos*; Myrtaceae), Malay Apple (*Syzygium malaccense*; Myrtaceae), Mamey Sapote (*Pouteria sapota*; Sapotaceae), Mammee Apple (*Mammea americana*; Guttiferae), Mamoncillo (*Melicoccus bijugatus*; Sapindaceae), Mandarin (*Citrus reticulata*), Mangaba (*Hancornia speciosa*; Apocynaceae), Mango (*Mangifera indica*; Anacardiaceae), Mangosteen (*Garcinia mangostana*; Guttiferae), Manila tamarind (*Pithecellobium dulce*; Leguminosae), Manoao (*Manoao colensoi*), Maqui (*Aristotelia chilensis*; Elaeocarpaceae),Marang, Marula (*Sclerocarya birrea*), Breadnut, Mayan (*Brosimum alicastrum*; Moraceae), Mayapple (*Podophyllum* spp.erberidaceae), Maypop (*Passiflora incarnata*; Passifloraceae), Medlar (*Mespilus germanica*), Meiwa Kumquat (*Fortunella japonica*; Rutaceae), Melinjo, Melon pear, Midyim (*Austromyrtus dulcis*; Myrtaceae), Miracle Fruit (*Synsepalum dulcificum*; Sapotaceae), Mock Strawberry or Indian Strawberry (*Potentilla indica*; Rosaceae), , Monkey Jackfruit (*Artocarpus rigidus*; Moraceae), Monkey Tamarind (*Inga edulis*; Leguminosae), Monstera (*Monstera deliciosa*; Araceae), Split-leaf Philodendron, Montessa Granadilla (*Passiflora platyloba*; Passifloraceae), Mora Común (*Rubus adenotrichus*), Mora de Castilla (*Rubus glaucus*), Morinda, Morinda citrifolia, Mortiño, or Andean blueberry (*Vaccinium floribundum*), Mountain pepper (*Tasmannia* spp.; Winteraceae), Mountain Soursop (*Annona montana*; Annonaceae), Mulberry (*Morus* spp.; Moraceae) including black, red and white mulberry, Mundu (*Garcinia dulcis*), Muntries (*Kunzea pomifera*; Myrtaceae), Muscadine (*Vitis rotundifolia*; Vitaceae), Muskmelon, Naartjie (*Citrus reticulata*, *Citrus nobilis*), Nagami Kumquat (*Fortunella margarita*; Rutaceae), Nageia (*Nageia* spp.), Nance (*Byrsonima crassifolia*; Malpighiaceae), Nannyberry or sheepberry (*Viburnum* spp.; Caprifoliaceae), Naranjilla (*Solanum quitoense*; Solanaceae), Native currant (*Acrotriche depressa*; Ericaceae), Native gooseberry (*Physalis minima*; Solanaceae), Native raspberry (Rubus parviflorus), Neem (*Azadirachta indica*; Meliaceae), Néré (*Parkia biglobosa*), Nonda plum (*Parinari nonda*), Noni (*Morinda citrifolia*; Rubiaceae), Nungu (*Borassus flabellifer*; Arecaceae), Nutmeg (*Myristica fragrans*; Myristicaceae), Oil Palm (*Elaeis guineensis*; Arecaceae), Olive, Orange, Oregon grape (*Mahonia aquifolium*; Berberidaceae), Oroblanco (Citrus paradisi C. grandis) Rutaceae (Also called the sweetie), Otaheite gooseberry (*Phyllanthus acidus*; Phyllanthaceae), Palmyra Palm/Toddy Palm (*Borassus flabellifer*; Arecaceae), Papaya (*Carica papaya*; Caricaceae), Passion fruit or Granadilla (*Passiflora edulis* and other *Passiflora* spp.; Passifloraceae), Pawpaw (*Asimina triloba*; Annonaceae, (*Carica papaya*; Caricaceae), Peach (of the normal and white variety) and its variant the nectarine (*Prunus persica*), Peach palm (*Bactris gasipaes*; Arecaceae), Peanut (*Arachis hypogaea*; Fabaceae), Peanut butter fruit (*Bunchosia argentea*; Malpighiaceae), Pear, European and Asian species (*Pyrus*), Pecan (*Carya illinoinensis* or *illinoensis*; Juglandaceae), Pepino (*Solanum muricatum*), Pequi (*Caryocar brasiliensis*; Caryocaraceae), Persian lime, Peumo (*Cryptocarya alba*; Lauraceae), Phalsa (*Grewia subinaequalis*; Tiliaceae), Pigeon pea, Pigeon plum (*Coccoloba diversifolia*; lygonaceae), Pigface (*Carpobrotus glaucescens*; Aizoaceae), Pili Nut (*Canarium ovatum*; Burseraceae), Pindo Palm (*Butia Capitata*; Arecaceae), Pineapple (*Ananas comosus*; Bromeliaceae), Pineapple guava (*Feijoa sellowiana*; Myrtaceae), Pink-flowered Native Raspberry (*Rubus parvifolius*; Rosaceae), Pistachio (*Pistacia vera*; Anacardiaceae), Pitomba (*Eugenia luschnathiana* or *Talisia esculenta*), Plum, Pois doux (*Inga edulis*, *ice-cream bean,* or *inga-cipó* in Portuguese), Pomegranate (*Punica granatum*; Punicaceae), Pomelo (also known as the shaddock) (*Citrus maxima*), Pommecythère or pomcité (*Spondias cytherea*); Pommerac (*Eugenia malaccensis*), Pond-apple (*Annona glabra*; Annonaceae), Prickly pear (*Opuntia spp*.; Cactaceae), Pulasan (*Nephelium mutabile*; Sapindaceae), Pummelo (*Citrus grandis*; Rutaceae), Pumpkin (Cucurbita spp.), Pupunha (*Bactris gasipaes*; Arecaceae); also known as *Peach Plum* or *Pewa*, Purple apple-berry (*Billarderia longiflora*; Pittosporaceae), Purple granadilla *(Passiflora edulis f edulis*; Passifloraceae), Purple Guava (*Psidium rufum*; Myrtaceae), Purple Mombin (*Spondias purpurea*; Anacardiaceae), Quandong (*Santalum acuminatum*; Santalaceae), Queensland Ebony (*Diospyros humilis*), Quince (*Cydonia oblonga* and *Chaenomeles*), Raisin tree (*Hovenia dulcis,* Rhamnaceae), Rambutan (*Nephelium lappaceum*; Sapindaceae), Raspberry, several species (genus *Rubus*), Red granadilla (*Passiflora coccinea*; Passifloraceae), Red Mombin (*Spondias purpurea*; Anacardiaceae), Red Mombin (*Spondias purpurea*; Anacardiaceae), Red Mulberry (*Moras rubra*), Rhubarb (*Rheum rhaponticum*; Polygonaceae), Riberry (*Syzygium luehmannii*; Myrtaceae), Rimu (*Dacrydium cupressinum*), Rollinia (*Rollinia mucosa*; Annonaceae), Rose Apple (*Syzygium jambos*; Myrtaceae), Rose hip, the fruitlike base of roses (*Rosa*); Rose-leaf Bramble (*Rubus rosifolius*; Rosaceae), Rose myrtle (*Archirhodomyrtus beckleri*; Myrtaceae), Rough Shell Macadamia (*Macadamia tetraphylla*; Proteaceae), Rowan (*Sorbus*), Safou (*Dacryodes edulis*), Sageretia (*Sageretia theezans*; Rhamnaceae), Saguaro (*Carnegiea gigantea*; Cactaceae), Salak (*Salacca edulis*; Arecaceae), Salal (*Gaultheria shallon*; Ericaceae), Salmonberry (*Rubus spectabilis*), Sandpaper Fig (*Ficus coronata*; Moraceae), Santol (*Sandoricum koetjape*; Meliaceae), Sapodilla (*Manilkara zapota*; Sapotaceae), Saskatoonberry (*Amelanchier alnifolia,* Rosaceae), Saw Palmetto (*Serenoa repens*; Arecaceae), Sea-buckthorn (*Hippophae rhamnoides*; Elaeagnaceae), Sea Grape (*Coccoloba uvifera*; Polygonaceae), Serviceberry or Saskatoon (*Amelanchier*), Shipova (× *Sorbopyrus auricularis*), Sloe (*Prunus spinosa*, Rosaceae), Small-leaf tamarind (*Diploglottis campbellii*; Sapindaceae), Snow berry (*Gaultheria hispida*; Ericaceae), Soncoya (*Annona diversifolia*; Annonaceae), Service tree (*Sorbus domestica*), Soursop (*Annona muricata*; Annonaceae), Southern Crabapple (*Malus angustifolia*; Rosaceae), Spanish lime (*Melicoccus bijugatus*; Sapindaceae), Spanish tamarind (*Vangueria madagascariensis*), Spiny Monkey-orange (*Strychnos spinosa*), Star Apple (*Chrysophyllum cainito*; Chrysobalanaceae), also called caimito or *caimite*, Starfruit, see carambola, Strawberry (*Fragaria*), Strawberry Guava (*Psidium littorale*; Myrtaceae), Strawberry Pear, Sugar Apple (*Annona squamosa*; Annonaceae); ata in Portuguese, Surinam Cherry (*Eugenia uniflora*; Myrtaceae), Sweet apple-berry (*Billarderia cymosa*; Pittosporaceae), Sweet Granadilla (*Passiflora ligularis*; Passifloraceae), Sweet Lemon (*Citrus limetta*), Sweet orange. Sweet pepper, Sweetsop (*Annona squamosa*; Annonaceae), Sycamore fig (Ficus sycomorus. Moraceae), Tahitian apple (*Spondias dulcis*), Tamarillo or Tree Tomato (*Cyphomandra betacea*; Solanaceae), Tamarind (*Tamarindus indica*; Leguminosae), Tangerine, and similar, Tanjong (*Mimusops elengi*; Sapindaceae), Texas Persimmon (*Diospyros texana*; Ebenaceae), Thimbleberry (*Rubus parviflorus*), To̅tara (*Podocarpus totara*), Toyon (*Heteromeles arbutifolia*; Rosaceae), Tropical Almond (*Terminalia catappa*; Combretaceae), Ugni (*Ugni molinae*; Myrtaceae), Vanilla (*Vanilla planifolia*; Orchidaceae), Velvet Tamarind (*Dialium indum*; Leguminosae), Wampee (*Clausena lansium*; Rutaceae), Water Apple (*Syzygium aqueum*; Myrtaceae), Watermelon (*Citrullus lanatus*), Wax apple ("Syzygium samarangense), Wax Gourd, or winter melon (*Benincasa hispida*), Wax jambu (*Syzygium samarangense*; Myrtaceae), White aspen (*Acronychia oblongifolia*; Rutaceae), White Mulberry (*Morus alba*), White Sapote (*Casimiroa edulis*; Rutaceae), Wild grape (*Ampelocissus acetosa*), Wild orange (*Capparis mitchellii*; Capparaceae), Wild peach (*Terminalia carpentariae*)*,* Wild plum (munydjudj) (*Buchanania obovata*), Wild Mangosteen (*Garcinia indica*), Wineberry (*Rubus phoenicolasius*), Wolfberry (*Lycium barbarum*, *Lycium* spp.; Solanaceae), Wongi (*Manilkara kaukii*; Sapotaceae), Wood Apple (*Feronia limonia*; Rutaceae), Yangmei (*Myrica rubra*; Myricaceae), Yantok, or rattan fruit (*Calamus manillensis*), Yellow Granadilla (*Passiflora edulis f flavicarpa*; Passifloraceae), Yellow Mombin (*Spondias mombin*; Anacardiaceae), Yellow plum (*Ximenia americana*; Olacaceae), Yew (*Taxus baccata*; Taxaceae), Youngberry, and Zig Zag Vine (*Melodurum leichhardtii*; Annonaceae).

In addition to the above food, additional ingredients necessary or desired in the preparation of the food may be added before wrapping the food. Additional ingredients may be selected from creme, yoghurt, curd, cheese, ketchup and/or mustard, but are not limited to. The additional ingredient may be applied directly to the wrapping paper or may be wrapped together with the respective food.

The wrapping paper according to the invention may be used to wrap food. Depending on the purpose of wrapping the food, the wrapping process may lead to a mere loose wrapping of the food or to a relatively tight wrapping so that the food is in close contact to the wrapping paper. For example, the wrapping paper may be used in the form of sheets, leafs (or leaf-like shapes), sticks, bands, cups, mugs, bags, papillotes, boxes, cases, cylinders, bowls, flasks, kettles, bottles or the like, straws or tubes, discs or sheets and the like. In one embodiment the wrapping paper is provided in the form of a bag, papillote or box which may receive the food either for storage or further processing, wherein a papillote in the sense of the invention is a folded pouch or parcel into which the food may be placed and processed therein. The size of the bag, papillote, box or any other receptacle into which the food is placed may be chosen as appropriate. In another embodiment, the wrapping paper may form a receptacle, such as bag or box having an origami opening.

Depending on the preparation process, the wrapping paper may have a different flexibility and stiffness depending on the intended use. The wrapping paper may be relatively flexible so that any shape and kind of food may be wrapped in a close manner. Moreover, the flexibility of the wrapping paper may be adjusted by moisturizing the paper. Depending on the degree of moisture, the flexibility varies. The skilled person in the art will be aware of the moisture degree in order to achieve the necessary flexibility. The flexibility of the wrapping paper may also be influenced by its basis weight. Generally, the higher is the weight, the lower is the flexibility of the wrapping paper. Also, the flexibility may be influenced by the raw materials used to prepare the wrapping paper as some plants may provide a more original flexibility than others. For example, there is a different quantity of celluloses in the plant materials leading to different flexibility of the wrapping paper. During the preparation process the flexibility may also be adjusted by the quantity and quality of added materials as listed above, such as wood pulp, cellulose and its derivatives, and the like. Thus, the flexibility of the wrapping paper may be adjusted by a combination of the above features.

In one embodiment of the invention, the food is used in unprocessed form, i.e. it is used in its original form without any further treatment.

Before the food is wrapped or packed (as described below) with the wrapping paper the food may be optionally preprocessed. In one embodiment, preprocessing the food means improving the capacity to receive the aroma, flavor and/or taste provided by the wrapping paper. For example, the food may be penetrated, pressed, scratched, cut in, tenderized, or the like, using any conventional means, such as, but not limited to, fork, knife, meat tenderizer, or the like.

In a further embodiment of the invention preprocessing food involves, but is not limited to, cooking, salting, smoking and/or fermenting the food. The pre-process may depend on the specific food which should be preprocessed.

The invention particularly includes the use of the wrapping paper of the invention for culinary use in cooking, frying, roasting, barbecuing, baking and/or marinating, for example, like a conventional bouquet garni, as described in this description. Specifically, the invention includes the use of the wrapping paper of the invention as a food or food product, for culinary or cooking purposes, or for aromatic applications and the like, as described above and in the following description and examples.

In one embodiment of the invention the wrapping paper is used for marinating food. Generally, marinating is the process of contacting foods with composition of herbs and/or spices to further flavor the food. In the present invention the marinating process is accomplished by wrapping the food with the inventive wrapping paper or by inserting the food into a bag formed from the wrapping paper or any other kind of form of the wrapping paper. The food may be wrapped for a specific period of time, depending on the degree of marination. For example, the food may be wrapped for a few minutes, such as about 1, about 2, about 5, about 10, about 15 or about 30 minutes. In one embodiment the food may be wrapped for several hours, such as about 1, about 2, about 3, about 4, or about 5 hours. However, the food may even be marinated for a longer period of time, if necessary to achieve the desired effect.

The marinated food may then be further process by cooking, frying, roasting, barbecuing, baking or the like, or may be consumed in the state after the marinating process. In a further embodiment, the marinated food may also be used in cooking, frying, roasting, barbecuing, baking or the like, without removing the wrapping paper or by removing the wrapping paper and using a new and/or additional wrapping paper. In one embodiment the new wrapping paper may provide a different aroma, flavor and/or taste compared to the wrapping paper used for the marinating process.

In one embodiment of the invention, the wrapping paper is treated with a microbiotic agent. The microbiotic agent may be a fungus, bacteria or the like. Examples of such microbiotic agents are, but are not limited to, mold, yeast, lactic acid bacteria, probionic bacteria, halophilic aerobic bacteria, and the like. Such microbiotic coating may additionally provide a specific flavor and/or color to the food and may help ripening the food in the same time.

In another embodiment of the invention the wrapped food may be cooked, fried, roasted, barbecued or baked. In doing so, the wrapped food may be placed in a cooking utensil and processed. The cooking utensil may be selected from, but is not limited to, a pan, a pot, a cup, a grill, a chip pan, a casserole, an oven, and a pressure cooker.

For example, in one embodiment the wrapped food may be placed in boiling water in order to be cooked for a specific period of time. In such an embodiment the wrapping paper may be considered as a bouquet garni. A conventional bouquet garni is a bundle of herbs usually tied together with string and mainly used to prepare soup, stock, and various stews (herb and spice mixture). The bouquet is cooked with the other ingredients but is removed prior to consumption. Sometimes, the bouquet garni is not bound with string but its ingredients are filled into a small sachet, a net, or even a tea strainer, instead. Traditionally, the aromatics are bound within leek leaves, though a coffee filter (or cheesecloth) and butcher twine can be used, instead.

For example, in one embodiment the wrapping paper of the invention may either be made from a single herb, fruit, spice or vegetable (such as, but not limited to, parsley, thyme, bay leaf, basil, burnet, chervil, rosemary, peppercorns, savory and tarragon, carrot, celery (leaves or stem), celeriac, leek, onion and parsley root) or from a mixture of herbs, fruits, spices and/or vegetables. If a mixture of herbs, fruits, spices and/or vegetables is used, the wrapping paper may be used as a new form of a bouquet garni. In one embodiment, the herbs for the wrapping paper of the invention are parsley, thyme and bay leaf. In another embodiment, and depending on the recipe, the bouquet garni may also include basil, burnet, chervil, rosemary, peppercorns, savory and tarragon. Vegetables such as carrot, celery (leaves or stem), celeriac, leek, onion and parsley root are sometimes included in the bouquet garni of the invention. However, in addition to the mere placement of the conventional bouquet garni in the boiling water, the direct contact between the wrapping paper and the food during the cooking process provides for a more intense and facilitated flavoring of the food.

In another embodiment, the wrapped food may be placed into a hot oil or fat in order to fry the wrapped food. For example, potatoes, such as French fries, or vegetables, such as onion rings, may have a specific taste or color when prepared by such a process. In one embodiment a chip pan is used for this process.

In a still further embodiment, the wrapped food may be steam cooked, for example in a pressure cooker or steamer. In such a process the flavor may either be transferred directly from the wrapping paper to the food and/or additionally through the steam which may be saturated with the flavor during the steaming process.

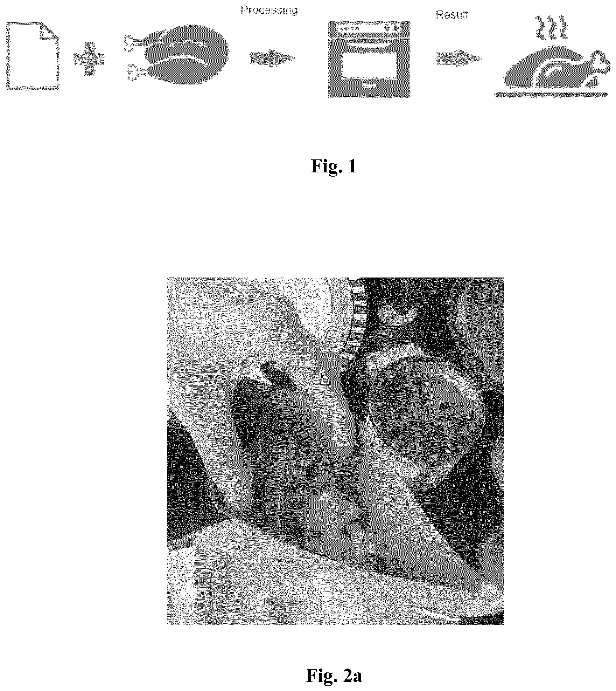

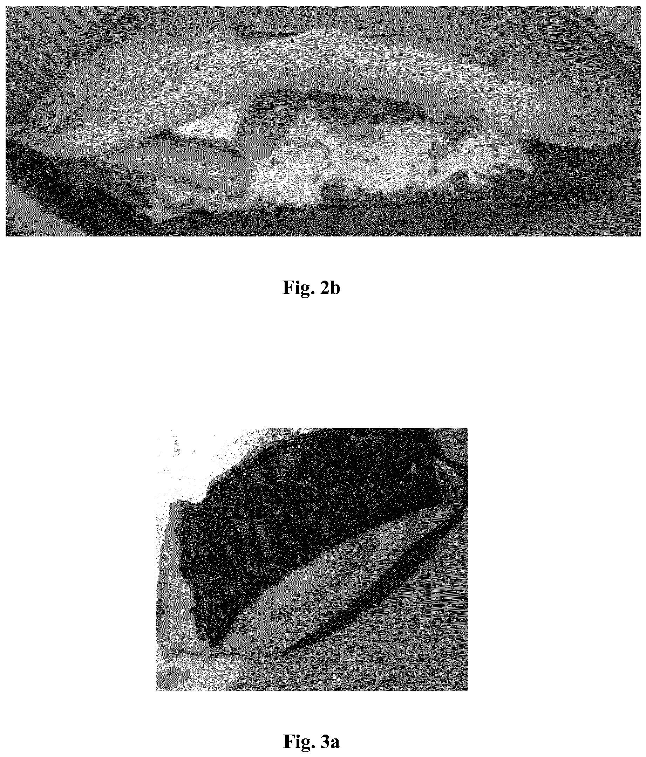

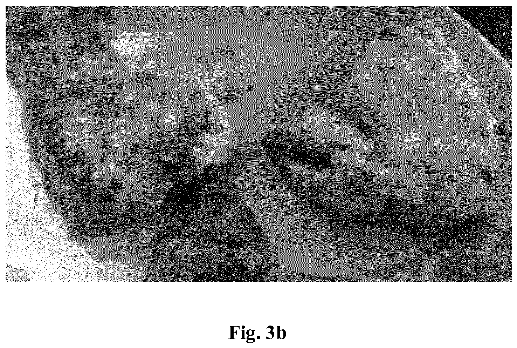

In a further embodiment of the invention, the wrapped food may be placed into a pan or baking oven or any other comparable cooking utensil and may be roasted, for example on each side, for a specific period of time (cf. Fig. 1, 3a and 3b). For example, the food may be wrapped and roasted in a pan or oven to transfer the flavors and/or taste from the wrapping paper, such as for example thyme and laurel, to the food. In a further embodiment, no additional fat or oil needs to be added for the roasting process as the wrapping paper provides also protection against the direct contact between the food and the hot surface of the pan or the oven.

In a further embodiment, the wrapping paper may be attached to the inner surface of an oven bag or may form the oven bag itself. Such an oven bag helps to keep the food being cooked moist by trapping the moisture in the bag and preventing it from escaping into the oven. At the same time the moisture which circulates within the bag is enriched with the aroma, flavor and/or taste which is provided by the wrapping paper. Thus, the food is additionally flavored by the enriched moisture. Further, in using a oven bag made solely from the wrapping paper, no risk of melting the oven bag in case it comes into contact with any hot surface within the oven may occur.

In one embodiment, all ingredients for a meal, such as for example meat, vegetables and cream, may be wrapped (or placed into a bag or papillote made from the inventive wrapping paper) and roasted at the same time (cf. Fig. 2a and 2b). Any combination of food may be used to be prepared in one step being wrapped at the same time by the inventive wrapping paper.

In one embodiment the wrapped food may be placed on a grill and barbecued for a specific period of time. For example, cheese, meat, fish or vegetables may be wrapped for such a process to provide a flavored food which may have a specific aroma or taste in combination with the flavors produced by the barbecuing process. The barbecuing may take place either by direct or indirect heat.

In a further embodiment the present invention is directed to the use of the wrapping paper for packing food. In one embodiment of the invention "packaging" means that the food is wrapped totally with the wrapping paper in order to provide a more or less closed system, wherein the food is not in direct contact with the environment. In one embodiment the food is inserted into a bag or box or similar form prepared from the wrapping paper. For example, a box made from the wrapping paper may be used to hold fast food, such as a hamburger, hot dog, or the like.

In one embodiment the packed food may additionally be fixed or sealed using for example cord, toothpicks, aluminum foil, plastic foil, transparent foil, tape, or the like, in order to ensure that the package will not open on its own.

Generally, packing food leads to a product which can be stored for a specific period of time. For example, the packed food may be stored for several days, months or years, such as up to about 1 day, about 5 days, about 10 days, about 20 days, about 1 month, about 2 month, about 3 month, about 6 month, about 1 year or about 2 years. However, any other time which is suitable for the respective food may be applicable.

During the storage period the food is intensively flavored by the wrapping food, which may be particularly useful for food which has no specific taste of its own or which has a very strong taste of its own, which should be attenuated or altered. For example, cheese may be wrapped with the wrapping paper and stored for a specific period of time in order to provide a unique flavored cheese thereafter. Also, during the storage period the food may change its color due to the contact with the wrapping paper, which may lead to a more good-looking appearance of the food.

For example, the packing may be used to aid in altering processes of specific food, such as cheese, which could be provided with a specific taste and/or an improved life period during the packing and/or storage of the wrapped food.

Depending on the food which is wrapped with the wrapping paper, specific storage conditions may be applied. In one embodiment the storage condition is adjusted in such a way that the flavoring of the stored food is particularly improved.

In a further embodiment of the present invention, the food is packed with different wrapping papers at the same time leading to a combination of taste for the overall food or in specific areas of the food.

In one embodiment the packed food may be ready for transport. During this storage and/or transportation period, the inventive wrapping paper transfers the aroma, flavor and/or taste to the food and aids in improving the taste and/or avoiding loss of taste during storage. Also, the wrapping paper may aid as protection against influences from the environment during storage and/or transportation.

Thus, using the wrapping paper, the present invention is also directed to the preparation of food. The food is wrapped, covered and/or packed with the wrapping paper and may subsequently be processed by cooking, frying, roasting, barbecuing and/or baking the wrapped food as already outlined above.

In one embodiment of the invention with respect to preparing food, the wrapping paper may be used within the food. In this embodiment the wrapping paper is inserted into the food and processed as described above by cooking, frying, roasting, barbecuing and/or baking. During the processing step, the aroma, flavor and/or taste provided by the wrapping paper is delivered to the food from within. When used as stuffing, the wrapping paper may be used in addition to other stuffing ingredients which may generally be used for the respective food. For example, the wrapping paper may be used to flavor poultry such as chicken or turkey or may be used to flavor fruits, but is not limited to. After the preparation process the wrapping paper may be removed from the food.

The products enable a more efficient way to transfer the flavor, aroma and/or taste of a plant (up to 100% solubles may be extracted from the plant) in the sense that more solubles can be released than natural plant ingredients for a given weight of material.

The process for making the wrapping paper also allows for specifically adjusting the final composition of the products, such as to remove from the soluble or the non-soluble portion(s) for example foreign matters, components altering taste and/or odor, or caffeine, nicotine, pesticides, aluminum, heavy metals, mycotoxins, toxicants and allergenic molecules such as coumarin, farnesol, geraniol, limonene, linalol, safrole, methyleugenol, or by adding to the soluble or the non-soluble portion(s) for example desirable additives, such as sweeteners, sugars, flavors, casings, vitamins, colorants, minerals, taste enhancers.

The soluble portion in the reconstituted material can be precisely adjusted (decreased as compared to standard level, at standard level, or increased as compared to standard level). A key benefit is that the level of ingredients in the reconstituted material can be precisely increased to a level higher than in the original natural form, thus allowing for more concentrated (more intense) flavoring of the food. The adjustment of ingredients can also guarantee a consistent, standardized level of delivered ingredients to compensate natural variations of active ingredients in plants.

Preferably, the method described herein also allows for reduction of undesired compounds from the material, such as to selectively remove undesired components (such as, for example but not limited to, natural ingredients, caffeine, nicotine, aluminum, heavy metals, pesticides, impurities or the like). For example, it is possible to remove components from either the soluble portion (plant extract) or from the non-soluble portion (solid plant particles) or both by liquid-liquid extraction, physical adsorption, centrifugation, chromatography, crystallization, decantation, by use of a demister, drying, distillation, electrophoresis, elutriation, evaporation, solid phase or liquid-liquid extraction, flotation, flocculation, filtration (for example using membranes), vapor-liquid separation, and/or sublimation and other means well known to the skilled person, preferably before applying the plant extract to the base web.

In connection with adding ingredients, extracts of different sources and origins, flavors, coloring agents or the like may be used, such as chlorophyll, anthocyans, caramel, and caroteinoids. For example, when using tea or herbs it is possible to include L-menthol at various quantities (such as 6% or 15%) in the finished product. Products so obtained have a distinctive taste and aroma of menthol. In one embodiment eugenol, thymol or plant extracts/concentrates can be added to the reconstituted wrapping paper.

The combination of different plant materials through the reconstitution process into a single wrapping paper or fiber web impregnated with extracts from different plants (the same plant or blends) offers new taste experiences and additive or synergistic effects. For example, it is known that combinations of certain plant extracts or combinations of certain plant ingredients have additive or synergistic effects, such as, for example, a mixture of hops and valerian extracts for use in treating insomnia and vigilance (Blumenthal and al., J. Herbal Medicine, expanded Commission E monographs, American Botanical Council, Austin, 2000, 394-400), or mixtures of oregano and cranberry extracts for use in treating *H. pylori* infections (Lin et al., Appl. Environ. Microbiol. December 2005, vol. 71, no. 12, 8558-8564), or different mixtures of extracts of *S. baicalensis, D. morifolium, G. uralensis and R. rubescens* tested for their additive or synergistic effect in prostate cancer cell lines (Adams et al., Evid Based Complement Alternat Med. 2006 March; 3(1): 117-124).

In the context of the present invention, the reconstituted plant material or wrapping paper may be used to blend a single plant (or a mixture of different plants) together with natural materials in order to improve the quality (such as the chemical constitution, the consistency or sensory profile and characteristics) of the product or blend.

The production method also provides for reducing microbiological load of the final products because of the high temperatures during the papermaking process.

The wrapping paper provides a light material having a small surface, which allows economic packaging/shipping. For the consumer, the products are easy to transport and easy to use.

The wrapping paper may be available in all shapes, dimensions and formats, as already described above, such as sheets, leafs (or leaf-like shapes), sticks, bands, cups, mugs, bags, papillotes, boxes, cases, cylinders, bowls, flasks, kettles, bottles or the like, straws or tubes, discs or sheets and the like, and can be customized with a logo or even an instruction how to use the wrapping paper.

In all uses describes herein the food may be in direct and/or close contact with the wrapping paper after the respective wrapping, covering and/or packing step. The nature of the respective contact is as described above.

All steps may be carried out as described above concerning the general use of the wrapping paper.

The step of cooking, frying, roasting, barbecuing and/or baking is carried out in or on the respective cooking, frying, barbecuing and/or baking device such as, but not limited to, a pan, a pot, a cup, a grill, a chip pan, a casserole, an oven, and a pressure cooker, as already explained above.

The products may be provided in the form of kits comprising said sheets, leafs (or leaf-like shapes), sticks, bands, cups, mugs, bags, papillotes, boxes, cases, cylinders, bowls, flasks, kettles, bottles or the like, straws or tubes, discs or sheets and the like. The kits may also comprise extracts of plants of interest, suitable for the customer to impregnate said wrapping paper before wrapping or packing the food. The kits may comprise various types of plants of interest, i.e. various different fruits, herbs, medicinal plants, tea, vegetables and/or spices, in order to enable the customer to make his/her own blends as desired. In this way, the customer is able to create his/her flavor or taste. In these kits, the different types of plants may be in the form of different sheets, leafs (or leaf-like shapes), sticks, bands, cups, mugs, bags, papillotes, boxes, cases, cylinders. bowls, flasks, kettles, bottles or the like, straws or tubes, discs or sheets and the like, separately pre-impregnated with said different fruits, herbs, medicinal plants, tea, vegetables and/or spices. Alternatively, the different fruits, herbs, medicinal plants, tea, vegetables and/or spices may be provided in the kits in the form of separate plant extracts (or pre-mixed combinations), in order to be used for re-impregnation as described above.

In one embodiment, where the products are provided in the form of sheets like sheets of paper, impregnated with the plant extracts of interest as described above, the sheets may form separate pages and be put together like pages of a book. For example one or more page of said book may be impregnated with one type of plant (fruit, herb, medicinal plant, tea, vegetable and/or spice), whereas other pages are impregnated with different types of plants (fruit, herb, medicinal plant, tea, vegetable and/or spice). The pages that are impregnated with a certain plant extract, wherein the extract comprises the extract of either a single plant or a blend of plants, may contain a description of said plant(s) used for the impregnation of said page. The description may be written on or printed to said page using food inks or food dyes.

In one embodiment, the composition offers a high level of biodegradability, for example by allowing the composting of the wrapping paper.

In sum, the reconstituted plant products provide several benefits and advantages, such as
- no need to have many different spices to blend at home;
- delivers taste to the food;
- no need to add fats or oils;
- natural product, i.e. made with natural fruit, vegetable, tea, herbs and/or spices
- the provision of a preferably dispersible and biodegradable product;
- the ability to adjust the content of active ingredients (such as polyphenols, essential oils and the like) to provide a consistent composition;
- the ability to adjust (reduce) the content of undesired constituents (such as pesticides, caffeine, nicotine, aluminum, heavy metals, and the like);
- the ability to provide new sensory characteristics (such as adjusting intensity of flavor, mixture of various plants and the like); and
- reduction of the bacterial load during the manufacturing process.

The wrapping paper may be used in private households at home as well as in gastronomy and in food industry.

The following examples further describe and demonstrate embodiments that are within the scope of the present invention.

### Examples

### Example 1 (Reference example)

### Reconstitution of Thyme and Laurel leaves ("bouquet garni")

A reconstituted product was made according to the following method: Thyme (*Thymus vulgaris*) and Laurel (*Laurus nobilis*) natural leaves were initially blended with a ratio of 50/50 and aforementioned blend was heated at 85°C for 20 minutes with a blend/water ratio of 1 to 5 by weight. This was followed by an extraction step in a hydraulic press to separate the aqueous portion from the blend fiber portion. The recovered blend fiber portion was again heated at 85°C for 10 minutes with a tea/water ratio of 1 to 5 by weight. After an additional extraction (by pressing), the fibrous portion was then refined in a Valley beater at 1.4% consistency for 10 minutes. After refining, cellulosic fibers (a blend of abaca, hardwood and softwood pulps, with the respective ratios : 60/10/30) were added to the blend fibrous residue with a blend fiber/woodpulp ratio of 5 to 1 in weight and a wet strength agent was then added to the fibrous portion at a level of 5% w/w in order to make hand sheets. The aqueous portion was concentrated in an evaporator to a solid concentration of 50% and then coated on a hand sheet on a manual size-press. In this example, the product was produced at 34% extract content which is the balanced soluble content of the materials of the experiment. The coated hand sheets were dried on a plate dryer.

### Example 2 (Reference example)

### Papillote made from wrapping paper

A papillote (i.e. a small bag) is formed from the inventive wrapping paper of Example 1 and fixed with toothpicks or the like (cf. Fig 2a and 2b). Chicken, vegetables and cream is put into the papillote. The food is roasted for 15 minutes at about 190 °C in a baking oven. The papillote is taken out of the oven and tasted. The preparation is tasting thyme and laurel.

### Example 3

### Pan frying application

Chicken meat is wrapped with the wrapping paper of Example 1 and placed into a hot pan. After 10 minutes heating in the pan, the wrapped chicken is taken out of the pan and the wrapping paper is taken off. The chicken had a strong taste of thyme and laurel.

### Example 4

### Bread and precooked bread

In order to make a traditional bread pastry, the pastry is put into the wrapping paper of Example 1. After 45 minutes in a baking oven at about 220 °C, the wrapping paper is removed. The bread tasted thyme and laurel.

### Example 5 (Reference example)

A wrapping paper was made according to the following method: A black tea was initially heated at 85°C for 20 minutes with a tea/water ratio of 1 to 5 by weight. This was followed by an extraction step in a hydraulic press to separate the aqueous portion from the tea fiber portion. The recovered tea fiber portion was again heated at 85°C for 10 minutes with a tea/water ratio of 1 to 5 by weight. After an additional extraction (by pressing), the samples were then refined in a Valley beater at 1.4% consistency for 10 minutes. After refining, cellulosic fibers (a blend of abaca, hardwood and softwood pulps, with the respective ratios : 60/10/30) were added to the tea fibrous residue with a tea fiber/woodpulp ratio of 5 to 1 in weight in order to make hand sheets. The aqueous portion was concentrated in an evaporator to a solid concentration of 50% and then coated on a hand sheet on a manual size-press. The soluble level is typically between 27 and 37% in dry finished product. The coated hand sheets were dried on a plate dryer.

### Example 6 (Reference example)

The following example demonstrates that the delivery of solubles and active ingredients can be easily adjusted in the manufacturing process (either decreased or increased as compared to a given standard).

As control, a conventional tea was used containing solubles in an amount of 26% (w/w). The soluble content was measured by determining the weight of a given sample before and after extraction. In a separate experiment, a portion of the same tea was subjected to a manufacturing process similar to example 4. The amount of solubles was adjusted in three different runs to 5% (w/w; decreased level), to 26% (w/w; standard level) and to 50% (w/w; increased level) by adjusted the coating ratio during impregnation.

The experiment demonstrates that the reconstituted product can be used to provide a consistent, standardized delivery level of soluble/active ingredients as compared to the natural products that generally show an inherent variability.

### Example 7 (Reference example)

### Reconstitution of Thyme leaves

A reconstituted product was made according to the following method: Thyme (*Thymus vulgaris*) was initially heated at 85°C for 20 minutes with a thyme/water ratio of 1 to 5 by weight. This was followed by an extraction step in a hydraulic press to separate the aqueous portion from the thyme fiber portion. The recovered thyme fiber portion was again heated at 85°C for 10 minutes with a thyme/water ratio of 1 to 5 by weight. After an additional extraction (by pressing), the fibrous portion was then refined in a Valley beater at 1.4% consistency for 10 minutes. After refining, cellulosic fibers (a blend of abaca, hardwood and softwood pulps, with the respective ratios : 60/10/30) were added to the thyme fibrous residue with a thyme fiber/woodpulp ratio of 5 to 1 in weight and a wet strength agent was then added to the fibrous portion at a level of 5% w/w in order to make hand sheets. The aqueous portion was concentrated in an evaporator to a solid concentration of 50% and then coated on a hand sheet on a manual size-press. In this example, the product was produced at 30% extract content, which is the soluble content of the starting material of the experiment. The coated hand sheets were dried on a plate dryer.

### Example 8 (Reference example)

### Reduction of microbiological load of tea through the reconstituted process

Reconstituted tea material produced during experiment 5 was analyzed vs. original tea material. Bacteria counts were run (Aerobic Plate Count after 48 hrs at 30 °C). Results are shown in the following table:

| | Total aerobic bacteria count (units/grs) |
|---|---|
| Original tea material | 8.3 x 10⁴ |
| Reconstituted teas | 1.4 x 10³ |

Results show that reconstitution process does reduce the microbiological load. Temperatures applied all along the process have a lethal effect of microorganisms.

### Example 8 (Reference example)

A reconstituted product was made according to the following method: coffee (*Coffea spp*) was initially heated at 60 °C for 20 minutes with a coffee/water ratio of 1 to 5 by weight. This was followed by an extraction step in a hydraulic press to separate the aqueous portion from the coffee fiber portion. The recovered coffee fiber portion was again heated at 60 °C for 10 minutes with a coffee/water ratio of 1 to 5 by weight. After an additional extraction (by pressing), the fibrous portion was then refined in a Valley beater at 1.4% consistency for 10 minutes. After refining, cellulosic fibers (a blend of abaca, hardwood and softwood pulps, with the respective ratios : 60/10/30) were added to the coffee fibrous residue with a coffee fiber/woodpulp ratio of 5 to 1 in weight and a wet strength agent was then added to the fibrous portion at a level of 5% w/w in order to make hand sheets. The aqueous portion was concentrated in an evaporator to a solid concentration of 50% and then coated on a hand sheet on a manual size-press. In this example, the product was produced at 30% extract content, which is the soluble content of the starting material of the experiment. The coated hand sheets were dried on a plate dryer.

### Exemple 9 (Reference example)

### Reconstitution of cocoa shells

A reconstituted product was made according to the following method: cocoa shells (*Theobroma cacao*) were initially heated at 60 °C for 20 minutes with a cocoa shell/water ratio of 1 to 5 by weight. This was followed by an extraction step in a hydraulic press to separate the aqueous portion from the cocoa shell fiber portion. The recovered cocoa shell fiber portion was again heated at 60 °C for 10 minutes with a cocoa shell/water ratio of 1 to 5 by weight. After an additional extraction (by pressing), the fibrous portion was then refined in a Valley beater at 1.4% consistency for 10 minutes. After refining, cellulosic fibers (a blend of abaca, hardwood and softwood pulps, with the respective ratios : 60/10/30) were added to the cocoa shell fibrous residue with a cocoa shell/woodpulp ratio of 5 to 1 in weight and a wet strength agent was then added to the fibrous portion at a level of 5% w/w in order to make hand sheets. The aqueous portion was concentrated in an evaporator to a solid concentration of 50% and then coated on a hand sheet on a manual size-press. In this example, the product was produced at 34% extract content, which is the soluble content of the starting material of the experiment. The coated hand sheets were dried on a plate dryer.

### Exemple 10 (Reference example)

### Reconstitution of cocoa shells

A reconstituted product was made according to the following method: cocoa shells (*Theobroma cacao*) were initially heated at 60 °C for 20 minutes with a cocoa shell/water ratio of 1 to 5 by weight. This was followed by an extraction step in a hydraulic press to separate the aqueous portion from the cocoa shell fiber portion. The recovered cocoa shell fiber portion was again heated at 60 °C for 10 minutes with a cocoa shell/water ratio of 1 to 5 by weight. After an additional extraction (by pressing), the fibrous portion was then refined in a Valley beater at 1.4% consistency for 10 minutes. After refining, cellulosic fibers (a blend of abaca, hardwood and softwood pulps, with the respective ratios : 60/10/30) were added to the cocoa shell fibrous residue with a cocoa shell/woodpulp ratio of 5 to 1 in weight and a wet strength agent was then added to the fibrous portion at a level of 5% w/w in order to make hand sheets. The aqueous portion was concentrated in an evaporator to a solid concentration of 50%. Then, cocoa extract was added to the liquor. Then, the blend of cocoa extracts and the aqueous portion concentrated was coated on a hand sheet on a manual size-press. In this example, the product was produced at 34% extract content, which is the soluble content of the starting material of the experiment. The coated hand sheets were dried on a plate dryer.

## Claims

1. Use of a wrapping paper for wrapping, flavoring, or preparing food,
wherein the wrapping paper comprises a layer of a fibrous plant product and a plant extract applied thereto;
wherein the wrapping paper does not contain nicotine, aluminum, heavy metals and/or pesticides;
wherein flavoring is transferring a specific aroma, flavor and/or taste to the food which is treated with the wrapping paper; and
wherein preparing is using the wrapping paper within the food.

2. Use according to claim 1, wherein the food is selected from meat, fish, cheese, bakery products, insects, vegetables and fruits, wherein optionally the food is used in unprocessed or preprocessed form.

3. Use according to claim 2, wherein the food is preprocessed by cooking, salting, smoking, fermenting, penetration, pressing, scratching, cutting in, tenderizing, or any mixture thereof.

4. Use according to any one of claims 1 to 3, wherein the wrapped food is cooked, fried, roasted, barbecued and/or baked, wherein optionally the cooking, frying, roasting, barbecuing and/or baking is carried out in or on a cooking, frying, roasting, barbecuing and/or baking device.

5. Use according to any one of claims 1 to 3, wherein the wrapped food is stored for a specific period of time.

6. Use according to any one of claims 1 to 3, wherein wrapping the food is for marinating the food.

7. Use according to any one of claims 1 to 6, wherein the wrapping paper is in the form of baking paper, leafs, leaf-like shapes, sticks, bands, cups, mugs, bags, papillotes, boxes, cases, cylinders, bowls, flasks, kettles, bottles or the like, straws or tubes, discs or sheets.

8. The use according to any one of claims 1 to 7, wherein the plant is selected from the group consisting of fruits, herbs, medicinal plants, tea, vegetables and/or spices, wherein optionally the fruits, herbs, medicinal plants, tea, vegetables and spices are selected from artemisia, balm, basil, chamomile, chive, cloves, coffee, coriander, dill, garlic, ginger, ginseng, gingko, jasmine, lavender, mint, orange blossom, oregano, persil, rooibos, rosa centifolia, rosemary, thyme, turmeric, sage, pepper, chili pepper, stevia rebaudiana, tarragon, white tea, yellow tea, green tea, oolong tea, black tea, pu-erh tea, vanilla, red or green vine, violet and/or willow; and/or Ajwain, carom seeds (Trachyspermum ammi), Akudjura (Solanum centrale), Alexanders (Smyrnium olusatrum), Alkanet (Alkanna tinctoria), Alligator pepper, mbongo spice (mbongochobi), hepper pepper (Aframomum danielli, A. citratum, A. exscapum), Allspice (Pimenta dioica), Angelica (Angelica archangelica), Anise (Pimpinella anisum), Aniseed myrtle (Syzygium anisatum), Annatto (Bixa orellana), Apple mint (Mentha suaveolens), Asafoetida (Ferula assafoetida), Asarabacca (Asarum europaeum), Avens (Geum urbanum), Avocado leaf (Peresea americana), Barberry (Berberis vulgaris and other Berberis spp.), Basil, sweet (Ocimum basilicum), Basil, lemon (Ocimum × citriodorum), Basil, Thai (O. basilicum var. thyrsiflora), Basil, Holy (Ocimum tenuiflorum), Bay leaf (Laurus nobilis), Bay leaf, Indian, tejpat, malabathrum, Boldo (Peumus boldus), Borage (Borago officinalis), Black cardamom (Amomum subulatum, Amomum costatum), Black mustard (Brassica nigra), Blue fenugreek, blue melilot (Trigonella caerulea), Brown mustard (Brassica juncea), Caraway (Carum carvi), Cardamom (Elettaria cardamomum), Carob (Ceratonia siliqua), Catnip (Nepeta cataria), Cassia (Cinnamomum aromaticum), Cayenne pepper (Capsicum annuum), Celery leaf (Apium graveolens), Celery seed (Apium graveolens), Chervil (Anthriscus cerefolium), Chicory (Cichorium intybus), Chili pepper (Capsicum spp.), Chives (Allium schoenoprasum), Cicely, sweet cicely (Myrrhis odorata), Cilantro, coriander greens, coriander herb (Coriandrum sativum), Cinnamon, Indonesian (Cinnamomum burmannii, Cassia vera), Cinnamon, Saigon or Vietnamese (Cinnamomum loureiroi), Cinnamon, true or Ceylon (Cinnamomum verum, C. zeylanicum), Cinnamon, white (Canella winterana), Cinnamon myrtle (Backhousia myrtifolia), Clary, Clary sage (Salvia sclarea), Clove (Syzygium aromaticum), Coriander seed (Coriandrum sativum), Costmary (Tanacetum balsamita), Cuban oregano (Plectranthus amboinicus), Cubeb pepper (Piper cubeba), Cudweed (Gnaphalium spp.), Culantro, culangot, long coriander (Eryngium foetidum), Cumin (Cuminum cyminum), Curry leaf (Murraya koenigii), Curry plant (Helichrysum italicum), Dill seed (Anethum graveolens), Dill herb or weed (Anethum graveolens), Elderflower (Sambucus spp.), Epazote (Dysphania ambrosioides), Fennel (Foeniculum vulgare), Fenugreek (Trigonella foenum-graecum), Filé powder, gumbo filé (Sassafras albidum), Fingerroot, krachai, temu kuntji (Boesenbergia rotunda), Galangal, greater (Alpinia galanga), Galangal, lesser (Alpinia officinarum), Galingale (Cyperus spp.), Garlic chives (Allium tuberosum), Garlic (Allium sativum),Garlic, elephant (Allium ampeloprasum var. ampeloprasum), Ginger (Zingiber officinale), Ginger, torch, bunga siantan (Etlingera elatior) (Indonesia), Golpar, Persian hogweed (Heracleum persicum) (Iran), Grains of paradise (Aframomum melegueta), Grains of Selim, Kani pepper (Xylopia aethiopica), Horseradish (Armoracia rusticana), Houttuynia cordata (Vietnam), Huacatay, Mexican marigold, mint marigold (Tagetes minuta), Hyssop (Hyssopus officinalis), Indonesian bay leaf, daun salam (Syzygium polyanthum), Jasmine flowers (Jasminum spp.), Jimbu (Allium hypsistum) (Nepal), Juniper berry (Juniperus communis), Kaffir lime leaves, Makrud lime leaves (Citrus hystrix) (Southeast Asia), Kala zeera (or kala jira), black cumin (Bunium persicum) (South Asia), Kawakawa seeds (Macropiper excelsum) (New Zealand), Kencur, galangal, kentjur (Kaempferia galanga),Keluak, kluwak, kepayang (Pangium edule), Kinh gioi, Vietnamese balm (Elsholtzia ciliata), Kokam seed (Garcinia indica) (Indian confectionery), Korarima, Ethiopian cardamom, false cardamom (Aframomum corrorima) (Eritrea), Koseret leaves (Lippia adoensis) (Ethiopia), Lavender (Lavandula spp.), Lemon balm (Melissa officinalis), Lemongrass (Cymbopogon citratus, C. flexuosus, and other Cymbopogon spp.), Lemon ironbark (Eucalyptus staigeriana) (Australia), Lemon myrtle (Backhousia citriodora) (Australia), Lemon verbena (Lippia citriodora), Leptotes bicolor (Paraguay and southern Brazil), Lesser calamint (Calamintha nepeta), nipitella, nepitella (Italy), Licorice, liquorice (Glycyrrhiza glabra), Lime flower, linden flower (Tilia spp.), Lovage (Levisticum officinale), Mace (Myristica fragrans), Mahlab, St. Lucie cherry (Prunus mahaleb), Marjoram (Origanum majorana), Marsh mallow (Althaea officinalis), Mastic (Pistacia lentiscus), Mint (Mentha spp.), Mountain horopito (Pseudowintera colorata) 'Pepper-plant' (New Zealand), Musk mallow, abelmosk (Abelmoschus moschatus), Mustard, black, mustard plant, mustard seed (Brassica nigra), Mustard, brown, mustard plant, mustard seed (Brassica juncea), Mustard, white, mustard plant, mustard seed (Sinapis alba), Nasturtium (Tropaeolum majus), Nigella, kalonji, black caraway, black onion seed (Nigella sativa), Njangsa, djansang (Ricinodendron heudelotii) (West Africa), Nutmeg (Myristica fragrans), Neem, Olida (Eucalyptus olida) (Australia), Oregano (Origanum vulgare, O. heracleoticum, and other species), Orris root (Iris germanica, I. florentina, I. pallida), Pandan flower, kewra (Pandanus odoratissimus), Pandan leaf, screwpine (Pandanus amaryllifolius, Paprika (Capsicum annuum), Paracress (Spilanthes acmella, Soleracea) (Brazil), Parsley (Petroselinum crispum), Pepper: black, white, and green (Piper nigrum), Pepper, Dorrigo (Tasmannia stipitata) (Australia), Pepper, long (Piper longum), Pepper, mountain, Cornish pepper leaf (Tasmannia lanceolata), Peppermint (Mentha piperata), Peppermint gum leaf (Eucalyptus dives), Perilla, shiso (Perilla spp.), Peruvian pepper (Schinus molle), Pandanus amaryllifolius, Brazilian pepper or Pink pepper (Schinus terebinthifolius), Quassia (Quassia amara) (bitter spice in aperitifs and some beers and fortified wines), Ramsons, wood garlic (Allium ursinum), Rice paddy herb (Limnophila aromatica) (Vietnam), Rosemary (Rosmarinus officinalis), Rue (Ruta graveolens), Safflower (Carthamus tinctorius), for yellow color, Saffron (Crocus sativus), Sage (Salvia officinalis), Saigon cinnamon (Cinnamomum loureiroi), Salad burnet (Sanguisorba minor), Salep (Orchis mascula), Sassafras (Sassafras albidum), Savory, summer (Satureja hortensis), Savory, winter (Satureja montana), Silphium, silphion, laser, laserpicium, lasarpicium (Ancient Roman cuisine, Ancient Greek cuisine), Shiso (Perilla frutescens), Sorrel (Rumex acetosa), Sorrel, sheep (Rumex acetosella), Spearmint (Mentha spicata), Spikenard (Nardostachys grandiflora or N. jatamansi), Star anise (Illicium verum), Sumac (Rhus coriaria), Sweet woodruff (Galium odoratum), Szechuan pepper, Sichuan pepper (Zanthoxylum piperitum), Tarragon (Artemisia dracunculus), Thyme (Thymus vulgaris), Thyme, lemon (Thymus × citriodorus), Turmeric (Curcuma longa), Vanilla (Vanilla planifolia), Vietnamese cinnamon (Cinnamomum loureiroi), Vietnamese coriander (Persicaria odorata), Voatsiperifery (Piper borbonense), Wasabi (Wasabia japonica), Water-pepper, smartweed (Polygonum hydropiper), Watercress (Rorippa nasturtium-aquatica), Wattleseed (from about 120 spp. of Australian Acacia), White mustard (Sinapis alba), Wild betel (Piper sarmentosum) (Southeast Asia), Wild thyme (Thymus serpyllum), Willow herb (Epilobium parviflorum), Winter savory (Satureja montana), Wintergreen (Gaultheria procumbens), Wood avens, herb bennet (Geum urbanum), Woodruff (Galium odoratum), Wormwood, absinthe (Artemisia absinthium), Yellow mustard (Brassica hirta = Sinapis alba), Yerba buena, any of four different species, many unrelated, Za'atar (herbs from the genera Origanum, Calamintha, Thymus, and/or Satureja), Zedoary (Curcuma zedoaria); and/or Anise tea (seeds or leaves), Asiatic penny-wort leaf, Artichoke tea, Bee Balm, Boldo, Burdock, Caraway tea, Catnip tea, Chamomile tea, Che Dang tea (Ilex causue leaves), Chinese knot-weed tea, Chrysanthemum tea, Cinnamon, Coca tea, Coffee tea leaves and coffee cherry tea, Cerasse, Citrus peel (including bergamot, lemon and orange peel), Dandelion coffee, Dill tea, Echinacea tea, Elderberry, European Mistletoe (Viscum album), Essiac tea, Fennel, Gentian, Ginger root, Ginseng, Goji, Hawthorn, Hibiscus, Ho Yan Hor Herbal Tea, Honeybush, Horehound, Houttuynia, Hydrangea tea (Hydrangea serrata Amacha), Jiaogulan, Kapor tea, Kava root, Kratom, Kuzuyu, Labrador tea, Lapacho (also known as Taheebo), Lemon Balm, Lemon and ginger tea, Lemon grass, Luo han guo, Licorice root, Lime blossom, Mint, Mountain Tea, Neem leaf, Nettle leaf, New Jersey Tea, Noni tea, Oksusu cha, Pennyroyal leaf, Pine tea, Qishr, Red clover tea, Red raspberry leaf, Roasted barley tea, Roasted wheat, Rooibos (Red Bush), Rose hip, Roselle petals (species of Hibiscus; aka Bissap, Dah, etc.), Rosemary, Sagebrush, California Sagebrush, Sage, Sakurayu, Salvia, Scorched rice, Skullcap, Serendib (tea), Sobacha, Spicebush (Lindera benzoin), Spruce tea, Staghorn sumac fruit, Stevia, St. John's Wort, Tea (Camellia sinensis), Thyme, Tulsi, Holy Basil, Uncaria tomentosa, commonly known as Cat's Claw, Valerian, Verbena (Vervains), Vetiver, Wax gourd, Wong Lo Kat, Woodruff, and/or Yarrow; and/or Açai (Euterpe oleracea, Alfalfa (Medicago sativa), Arnica (Arnica Montana, Asthma weed (Euphorbia hirta), Astragalus (Astragalus propinquus), Barberry (Berberis vulgaris), Belladonna (Atropa belladonna, Bilberry (Vaccinium myrtillus), Bitter gourd (Momordica charantia), Bitter leaf (Vernonia amygdalina), Bitter orange (Citrus × aurantium), Black cohosh (Actaea racemosa), Blessed thistle (Cnicus benedictus), Blueberries (genus Vaccinium), Burdock (Arctium lappa), Cat's claw (Uncaria tomentosa), Cayenne (Capsicum annuum), Celery (Apium graveolens), Chamomille (Matricaria recutita and Anthemis nobilis), Chaparral (Larrea tridentata), Chasteberry (Vitex agnus-castus), Chili (Capsicum frutescens), Cinchona, Clove (Syzygium aromaticum), Coffee senna (Cassia occidentalis), Comfrey (Symphytum officinale), Cranberry (Vaccinium macrocarpon), Dandelion (Taraxacum officinale), Dong quai (Angelica sinensis), Elderberry (Sambucus nigra), Eucalyptus (Eucalyptus globulus), European Mistletoe (Viscum album), Evening primrose (Oenothera spp.), Fenugreek (Trigonella foenum-graecum), Feverfew (Tanacetum parthenium), Flaxseed (Linum usitatissimum), Garlic (Allium sativum), Ginger (Zingiber officinale), Gingko (Gingko biloba), Ginseng (Panax ginseng and Panax quinquefolius), Goldenseal (Hydrastis canadensis), Grape (Vitis vinifera), Guava (Psidium guajava), Hawthorn (specifically Crataegus monogyna and Crataegus laevigata), Hoodia (Hoodia gordonii), Horse chestnut (Aesculus hippocastanum), Horsetail (Equisetum arvense), Jamaica dogwood (Piscidia erythrina or Piscidia piscipula), Kava (Piper methysticum), Kha , Konjac (Amorphophallus konjac), Kratom (Mitragyna speciosa), Kanna (Sceletium tortuosum), Lavender (Lavandula angustifolia), Lemon (Citrus limon), Licorice root (Glycyrrhiza glabra), Marigold (Calendula officinalis), Marsh mallow (Althaea officinalis), Milk thistle (Silybum marianum), Neem (Azadirachta indica), Noni (Morinda citrifolia), Oregano (Origanum vulgare), Papaya (Carica papaya), Peppermint (Mentha x piperita), Purple coneflower (Echinacea purpurea), Passion Flower (Passiflora), Red clover (Trifolium pratense), Rosemary (Rosmarinus officinalis), Sage (Salvia officinalis), Syrian Rue (aka Harmal) (Peganum harmala), St. John's wort (Hypericum perforatum), Saw palmetto (Serenoa repens), Thunder God Vine (Tripterygium wilfordii), Thyme (Thymus vulgaris), Tulasi (Ocimum tenuiflorum or Holy Basil), Turmeric (Curcuma longa), Umckaloabo (Pelargonium sidoides), Valerian (Valeriana officinalis), White willow (Salix alba), and/or Yerba santa (Eriodictyon crassifolium); and/or white tea, yellow tea, green tea, oolong tea, black tea, and/or pu-erh tea; including mixtures or blends thereof.

9. The use according to any of claims 1 to 8, wherein the layer of fibrous plant product and/or wherein the plant extract comprises a blend of different plants or are from the same plant or from different plants.

10. The use according to any of claims 1 to 9, wherein the layer of fibrous plant product comprises at least 70% of fibrous plant product from one plant, or wherein the layer of fibrous plant product and the plant extract comprises at least 70% of a plant extract from one plant.

11. The use according to any one of claims 1 to 10, wherein the wrapping paper is in the form of a fiber-web comprising from about 5% to about 100% (w/w) fibers of herbs, spices, medicinal plants, tea, fruits and/or vegetables.

12. The use according to claim 11, wherein the fiber-web comprises fibers of herbs, spices, tea, medicinal plants, fruits and/or vegetables and cellulosic fibers and/or synthetic fibers in a ratio of 40/60 (w/w), 60/40 (w/w) or 80/20 (w/w).

13. The use of any one of claims 1 to 12, further comprising cellulosic and/or synthetic fibers.

14. The use of any one of claims 1 to 13, further comprising a coating or impregnation with soluble portion (plant extract) of fruits, vegetables, herbs, medicinal plants, and/or tea.

## Patentansprüche

1. Verwendung eines Einwickelpapiers zum Einwickeln, Würzen oder Zubereiten von Lebensmitteln,
wobei das Einwickelpapier eine Schicht aus einem faserigen Pflanzenprodukt und einem darauf aufgebrachten Pflanzenextrakt umfasst;
wobei das Einwickelpapier kein Nikotin, Aluminium, Schwermetalle und/oder Pestizide enthält;
wobei Würzen ein spezifisches Aroma, Gewürz und/oder Geschmack auf das Lebensmittel überträgt, das mit dem Einwickelpapier behandelt wird; und
wobei die Zubereitung die Verwendung des Einwickelpapiers in dem Lebensmittel ist.

2. Verwendung nach Anspruch 1, wobei das Lebensmittel ausgewählt ist aus Fleisch, Fisch, Käse, Backwaren, Insekten, Gemüse und Früchten, wobei optional das Lebensmittel in unverarbeiteter oder vorverarbeiteter Form verwendet wird.

3. Verwendung nach Anspruch 2, wobei das Lebensmittel durch Kochen, Salzen, Räuchern, Fermentieren, Eindringen, Pressen, Kratzen, Einschneiden, Zartmachen oder eine Mischung davon vorverarbeitet wird.

4. Verwendung nach einem der Ansprüche 1 bis 3, wobei die eingewickelten Lebensmittel gekocht, gebraten, geröstet, gegrillt und/oder gebacken werden, wobei optional das Kochen, Braten, Rösten, Grillen und/oder Backen in oder auf einer Koch-, Brat-, Röst-, Grill- und/oder Backvorrichtung durchgeführt wird.

5. Verwendung nach einem der Ansprüche 1 bis 3, wobei das eingewickelte Lebensmittel für einen bestimmten Zeitraum gelagert wird.

6. Verwendung nach einem der Ansprüche 1 bis 3, wobei das Einwickeln des Lebensmittels zum Marinieren des Lebensmittels dient.

7. Verwendung nach einem der Ansprüche 1 bis 6, wobei das Einwickelpapier in Form von Backpapier, Blättern, blattförmigen Formen, Sticks, Bändern, Tassen, Bechern, Taschen, Papillen, Schachteln, Gehäusen, Zylindern, Schalen, Kolben, Kesseln, Flaschen oder dergleichen, Strohhalmen oder Röhren, Scheiben oder Blättern vorliegt.

8. Verwendung nach einem der Ansprüche 1 bis 7, wobei die Pflanze ausgewählt ist aus der Gruppe bestehend aus Früchten, Kräutern, Heilpflanzen, Tee, Gemüse und/oder Gewürzen, wobei optional die Früchte, Kräuter, Heilpflanzen, Tee, Gemüse und Gewürze ausgewählt sind aus Artemisia, Melisse, Basilikum, Kamille, Schnittlauch, Nelken, Kaffee, Koriander, Dill, Knoblauch, Ingwer, Ginseng, Ginkgo, Jasmin, Lavendel, Minze, Orangenblüte, Oregano, Persil, Rotbusch, Rosa Centifolia, Rosmarin, Thymian, Kurkuma, Salbei, Pfeffer, Chili, Stevia rebaudiana, Estragon, Weißer Tee, Gelber Tee, Grüner Tee, Oolong-Tee, Schwarzer Tee, Pu-erh-Tee, Vanille, Roter oder grüner Wein, Veilchen und/oder Weide; und/oder Ajowan, Karomsamen (Trachyspermum ammi), Akudjura (Solanum centrale), Alexanders (Smyrnium olusatrum), Alkanet (Alkanna tinctoria), Alligatorpfeffer, Mbongogewürz (mbongochobi), Hepper-Pfeffer (Aframomum danielli, A. citratum, A. exscapum), Piment (Pimenta dioica), Angelika (Angelica archangelica), Anis (Pimpinella anisum), Anismyrte (Syzygium anisatum), Annatto (Bixa orellana), Apfelminze (Mentha suaveolens), Asafoetida (Ferula assafoetida), Asarabacca (Asarum europaeum), Avens (Geum urbanum), Avocadoblatt (Peresea americana), Berberitze (Berberis vulgaris und andere Berberis spp.), Basilikum, süß (Ocimum basilicum), Basilikum, Zitrone (Ocimum x citriodorum), Basilikum, Thai (O. basilicum var. thyrsiflora), Basilikum, heilig (Ocimum tenuiflorum), Lorbeerblatt (Laurus nobilis), Lorbeerblatt, indisch, Tejpat, Malabathrum, Boldo (Peumus boldus), Borage (Borago officinalis), Schwarzer Kardamom (Amomum subulatum, Amomum costatum), Schwarzer Senf (Brassica nigra), Blauer Bockshornklee, Blauer Meliot (Trigonella caerulea), Brauner Senf (Brassica juncea), Kümmel (Carum carvi), Kardamom (Elettaria cardamomum), Johannisbrot (Ceratonia siliqua), Katzenminze (Nepeta cataria), Kassia (Cinnamomum aromaticum), Cayennepfeffer (Capsicum annuum), Sellerieblatt (Apium graveolens), Selleriesamen (Apium graveolens), Kerbel (Anthriscus cerefolium), Chicorée (Cichorium Intybus), Chilipfeffer (Capsicum spp.), Schnittlauch (Allium schoenoprasum), Myrrhenkerbel, süßer Myrrhenkerbel (Myrrhis odorata), Cilantro, Koriandergrün, Korianderkraut (Coriandrum sativum), Zimt, indonesisch (Cinnamomum burmannii, Cassia vera), Zimt, saigon oder vietnamesisch (Cinnamomum Loureiroi), Zimt, echt oder Ceylon (Cinnamomum verum, C. zeylanicum), Zimt, weiß (Canella winterana), Zimtmyrte (Backhousia myrtifolia), Salbei, Muskatellersalbei (Salvia sclarea), Nelke (Syzygium aromaticum), Koriandersamen (Coriandrum sativum), Costmary (Tanacetum balsamita), kubanischer Oregano, (Plectranthus amboinicus), Würfelpfeffer (Piper cubeba), Filzkraut (Gnaphalium spp.), Kulantro, Kulangot, langer Koriander (Eryngium foetidum), Kreuzkümmel (Cuminum cyminum), Curryblatt (Murraya koenigii), Currypflanze (Helichrysum italicum), Dillsamen (Anethum graveolens), Dillkraut oder Unkraut (Anethum graveolens), Holunderblüten (Sambucus spp.), Epazote (Dysphania ambrosioides), Fenchel (Foeniculum vulgare), Bockshornklee (Trigonella foenumgraecum), Filé-Pulver, Gumbo-Filé (Sassafras albidum), Fingerwurzel, Krachai, Temu Kuntji (Boesenbergia rotunda), großer Galgant (Alpinia galanga), kleiner Galgant (Alpinia officinarum), Galingale (Cyperus spp.), Knoblauchschnittlauch (Allium tuberosum), Knoblauch (Allium sativum), Knoblauch, Elefant (Allium ampeloprasum var. ampeloprasum), Ingwer (Zingiber officinale), Ingwer, Fackel, Bunga Siantan (Etlingera elatior) (Indonesien), Golpar, Persischer Bärenklau (Heracleum persicum) (Iran), Paradieskörner (Aframomum melegueta), Selim, Kanipfeffer (Xylopia aethiopica), Meerrettich (Armoracia rusticana), Houttuynia cordata (Vietnam), Huacatay, mexikanische Ringelblume, Minze-Ringelblume (Tagetes minuta), Ysop (Hyssopus officinalis), indonesisches Lorbeerblatt, Daun-Salam (Syzygium polyanthum), Jasminblüten (Jasminum spp.), Jimbu (Allium hypsistum) (Nepal), Wacholderbeere (Juniperus communis), Kaffernlimettenblätter, Makrud-Lindenblätter (Citrus hystrix) (Südostasien), Kala zeera (oder kala jira), Schwarzkümmel (Bunium persicum) (Südasien), Kawakawa-Samen (Makroiper excelsum) (Neuseeland), Kencur, Galgant, Kentjur (Kaempferia galanga), Keluak, Kluwak, Kepayang (Pangium edule), Kinh gioi, vietnamesischer Balsam (Elsholtzia ciliata), Kokam-Samen (Garcinia indica) (indische Süßwaren), Korarima, äthiopischer Kardamom, falscher Kardamom (Aframomum corrorima) (Eritrea), Koseret-Blätter (Lippia adoensis) (Äthiopien), Lavendel (Lavandula spp).), Zitronenmelisse (Melissa officinalis), Zitronengras (Cymbopogon citratus, C.) Flexuosus und andere Cymbopogon spp.), Zitronen-Eisenrinde (Eucalyptus staigeriana) (Australien), Zitronenmyrte (Backhousia citriodora) (Australien), Zitronenverbene (Lippia citriodora), Leptotes bicolor (Paraguay und Südbrasilien), Kleine Kalamint (Calamintha nepeta), Nipitella, Nepitella (Italien), Süßholz, Süßholz (Glycyrrhiza glabra), Lindenblüten, Lindenblüten (Tilia spp.), Liebstöckel (Levisticum officinale), Streitkolben (Myristica fragrans), Mahlab, St. Lucie-Kirsche (Prunus mahaleb), Majoran (Origanum majorana), Rohrmalve (Althaea officinalis), Mastix (Pistacia lentiscus), Minze (Mentha spp.), Berghoropito (Pseudowintera colorata) 'Pfefferpflanze' (Neuseeland), Moschuseibisch, Abelmosk (Abelmoschus moschatus), Senf, schwarz, Senfpflanze, Senfkorn (Brassica nigra), Senf, braun, Senfpflanze, Senfkorn (Brassica juncea), Senf, weiß, Senfpflanze, Senfkörner (Sinapis alba), Kapuzinerkresse (Tropaeolum majus), Nigella, Kalonji, schwarzer Kümmel, schwarzer Zwiebelsamen (Nigella sativa), Njangsa, Djansang (Ricinodendron heudelotii) (Westafrika), Muskatnuss (Myristica fragrans), Neem, Olida (Eucalyptus olida) (Australien), Oregano (Origanum vulgare, O. Heracleoticum und andere Arten), Orriswurzel (Iris germanica, I. florentina, I. Pallida), Pandanblume, Kewra (Pandanus odoratissimus), Pandanblatt, Schraubenkiefer (Pandanus amaryllifolius, Paprika (Capsicum annuum), Parakresse (Spilanthes acmella, Soleracea) (Brasilien), Petersilie (Petroselinum crispum), Pfeffer: schwarz, weiß und grün (Piper nigrum), Pfeffer, Dorrigo (Tasmannia stipitata) (Australien), Pfeffer, lang (Piper longum), Pfeffer, Berg, Kornisches Pfefferblatt (Tasmannia lanceolata), Pfefferminze (Mentha piperata), Pfefferminzgummi-Blatt (Eukalyptus dives), Perilla, Shiso (Perilla spp.), peruanischer Pfeffer (Schinus molle), Pandanus amaryllifolius, brasilianischer Pfeffer oder rosa Pfeffer (Schinus terebinthifolius), Quassia (Quassia amara) (bitteres Gewürz in Aperitifs und einigen Bieren und verstärkten Weinen), Ramses, Bärlauch (Allium ursinum), Reisfeldpflanze (Limnophila aromatica) (Vietnam), Rosmarin (Rosmarinus officinalis), Rue (Ruta graveolens), Saflor (Carthamus tinctorius), für gelbe Farbe, Safran (Crocus sativus), Salbei (Salvia officinalis), Saigonzimt (Cinnamomum loureiroi), Salatbrenner (Sanguisorba minor), Salep (Orchis mascula), Sassafras (Sassafras albidum), Bohnenkraut, Sommer (Satureja hortensis), Bohnenkraut, Winter (Satureja montana), Silphium, Silphion, Laser, Laserpicium, Lasarpicium (Altrömische Küche, Altgriechische Küche), Shiso (Perilla frutescens), Sauerampfer (Rumex acetosa), Sauerampfer, Schafe (Rumex acetosella), Spearmint (Mentha spicata), Spikenard (Nardostachys grandiflora oder N. Jatamansi), Sternanis (Illicium verum), Sumach (Rhus coriaria), Süßer Waldmeister (Galium odoratum), Szechuanpfeffer, Sichuanpfeffer (Zanthoxylum piperitum), Estragon (Artemisia dracunculus), Thymian (Thymus vulgaris), Thymian, Zitrone (Thymus x citriodorus), Kurkuma (Curcuma longa), Vanille (Vanille planifolia), vietnamesischer Zimt (Cinnamomum loureiroi), vietnamesischer Koriander (Persicaria odorata), Voatsiperiferie (Piper borbonense), Wasabi (Wasabia japonica), Wasserpfeffer, Smartweed (Polygonum hydrophiper), Brunnenkresse (Rorippa nasturtium-aquatica), Wattleseed (ab ca. 120 spp. von Australischer Akazie), Weißer Senf (Sinapis alba), Wilder Betel (Piper sarmentosum) (Südostasien), Wildthymian (Thymus serpyllum), Weidenkraut (Epilobium parviflorum), Winterbohnenkraut (Satureja montana), Wintergrün (Gaultheria procumbens), Holzsamen, Kräutermennet (Geum urbanum), Waldmeister (Galium odoratum), Wermut, Absinth (Artemisia absinthium), Gelber Senf (Brassica hirta = Sinapis alba), Yerba buena, eine von vier verschiedenen Arten, viele davon nicht verwandt, Za'atar (Kräuter aus den Gattungen Origanum, Calamintha, Thymus und/oder Satureja), Zedarium (Curcuma zedoaria); und/oder Anistee (Samen oder Blätter), Asiatisches Pfennigkrautblatt, Artischockentee, Bienenbalsam, Boldo, Kletten, Kümmel, Katzenminzentee, Kamillentee, Che Dang Tee (Hex causue leaves), Chinesischer Astkrauttee, Chrysanthementee, Zimt, Koka-Tee, Kaffeeblätter und Kaffeekirschentee, Cerasse, Zitrusschalen (einschließlich Bergamotte, Zitrone und Orangenschale), Löwenzahnkaffee, Dilltee, Echinacea-Tee, Holunderbeere, Europäische Mistel (Viscum-Album), Essiac-Tee, Fenchel, Enzian, Ingwerwurzel, Ginseng, Goji, Weißdorn, Hibiskus, Ho Yan Hor Kräutertee, Honeybush, Horehound, Houttuynia, Hortensientee (Hydrangea serrata Amacha), Jiaogulan, Kapor Tee, Kava Wurzel, Kratom, Kuzuyu, Labrador Tee, Lapacho (auch bekannt als Taheebo), Zitronenmelisse, Zitronen- und Ingwertee, Zitronengras, Luo han guo, Süßholzwurzel, Lindenblüten, Minze, Bergtee, Neemblatt, Brennnesselblatt, New Jersey Tee, Noni Tee, Oksusu cha, Pennyroyal Blatt, Pinientee, Qishr, Rotkleetee, Rotes Himbeerblatt, Gerstentee geröstet, Gerstenweizen geröstet, Rooibos (Roter Strauch), Hagebutte, Roselle Blütenblätter (Hibiskusart); auch bekannt als Bissap, Dah, etc.), Rosmarin, Salbeibürste, Kalifornische Salbeibürste, Salbei, Sakurayu, Salvia, Gebrannter Reis, Schädelkappe, Serendib (Tee), Sobacha, Spicebush (Lindera benzoin), Fichtentee, Hirschhornsumachfrucht, Stevia, St. John's Wort, Tee (Camellia sinensis), Thymian, Tulsi, Heiliges Basilikum, Uncaria tomentosa, allgemein bekannt als Katzenkralle, Baldrian, Eisenkraut (Eisenkraut), Vetiver, Wachskürbis, Wong Lo Kat, Waldmeister und/oder Schafgarbe; und/oder Acai (Euterpe oleracea, Alfalfa, Medicago sativa), Arnika (Arnica Montana, Asthma-Weed (Euphorbia hirta), Astragalus (Astragalus propinquus), Berberitze (Berberis vulgaris), Belladonna (Atropa belladonna, Heidelbeere (Vaccinium myrtillus), Bitterkürbis (Momordica charantia), Bitterblatt (Vernonia amygdalina), Bitterorange (Citrus x aurantium), Traubensilberkerze (Actaea racemosa), Selige Distel (Cnicus benedictus), Heidelbeeren (Gattung Vaccinium), Klette (Arctium lappa), Katzenkralle (Uncaria tomentosa), Cayenne (Capsicum annuum), Sellerie (Apium graveolens), Kamille (Matricaria recutita und Anthemis nobilis), Chaparral (Larrea tridentata), Chasteberry (Vitex agnus castus), Chili (Capsicum frutescens), Cinchona, Nelke (Syzygium aromaticum), Kaffeesenna (Cassia occidentalis), Beinwell (Symphytum officinale), Preiselbeere (Vaccinium macrocarpon), Löwenzahn (Taraxacum officinale), Dong quai (Angelica sinensis), Holunderbeere (Sambucus nigra), Eukalyptus (Eucalyptus globulus), Europäische Mistel (Viscum album), Nachtkerze (Oenothera spp.), Bockshornklee (Trigonella foenum-graecum), Fieberkraut (Tanacetum parthenium), Leinsamen (Linum usitatissimum), Knoblauch (Allium sativum), Ingwer (Zingiber officinale), Gingko (Gingko biloba), Ginseng (Panax ginseng und Panax quinquefolius), Orangenwurzel (Hydrastis canadensis), Traube (Vitis vinifera), Guave (Psidium guajava), Weißdorn (speziell Crataegus monogyna und Crataegus laevigata), Hoodia (Hoodia gordonii), Rosskastanie (Aesculus hippocastanum), Schachtelhalm (Equisetum arvense), Jamaika-Hartriegel (Piscidia erythrina oder Piscidia piscipula), Kava (Piper methysticum), Kha, Konjac (Amorphophallus konjac), Kratom (Mitragyna speciosa), Kanna (Sceletium tortuosum), Lavendel (Lavandula angustifolia), Zitrone (Zitrone), Süßholzwurzel (Glycyrrhiza glabra), Ringelblume (Calendula officinalis), Rohrmalve (Althaea officinalis), Mariendistel (Silybum marianum), Neem (Azadirachta indica), Noni (Morinda citrifolia), Oregano (Origanum vulgare), Papaya (Carica papaya), Pfefferminze (Mentha x piperita), Lila Sonnenhut (Echinacea purpurea), Passionsblume (Passiflora), Rotklee (Trifolium pratense), Rosmarin (Rosmarinus officinalis), Salbei (Salvia officinalis), Syrische Raute (auch bekannt als Harmal) (Peganum harmala), St. Johanniskraut (Hypericum perforatum), Sägepalme (Serenoa repens), Donnergottrebe (Tripterygium wilfordii), Thymian (Thymus vulgaris), Tulasi (Ocimum tenuiflorum oder Heiliges Basilikum), Kurkuma (Curcuma longa), Umckaloabo (Pelargonium sidoides), Baldrian (Valeriana officinalis), Weißweide (Salix alba) und/oder Yerba santa (Eriodictyon crassifolium); und/oder weißer Tee, gelber Tee, grüner Tee, Oolong-Tee, schwarzer Tee und/oder Pu-erh-Tee; einschließlich Mischungen oder Mischungen davon.

9. Verwendung nach einem der Ansprüche 1 bis 8, wobei die Schicht aus faserigem Pflanzenprodukt und/oder wobei der Pflanzenextrakt eine Mischung aus verschiedenen Pflanzen umfasst oder aus derselben Pflanze oder aus verschiedenen Pflanzen stammt.

10. Verwendung nach einem der Ansprüche 1 bis 9, wobei die Schicht aus faserigem Pflanzenprodukt mindestens 70% aus faserigem Pflanzenprodukt aus einer Pflanze umfasst, oder wobei die Schicht aus faserigem Pflanzenprodukt und der Pflanzenextrakt mindestens 70% eines Pflanzenextrakts aus einer Pflanze umfassen.

11. Verwendung nach einem der Ansprüche 1 bis 10, wobei das Einwickelpapier in Form einer Faserbahn vorliegt, die von etwa 5 % bis etwa 100 % (w/w) Fasern aus Kräutern, Gewürzen, Heilpflanzen, Tee, Früchten und/oder Gemüse umfasst.

12. Verwendung nach Anspruch 11, wobei die Faserbahn Fasern aus Kräutern, Gewürzen, Tee, Heilpflanzen, Früchten und/oder Gemüse und Cellulosefasern und/oder Kunstfasern in einem Verhältnis von 40/60 (w/w), 60/40 (w/w) oder 80/20 (w/w) umfasst.

13. Verwendung nach einem der Ansprüche 1 bis 12, ferner umfassend Cellulose- und/oder Kunstfasern.

14. Verwendung nach einem der Ansprüche 1 bis 13, ferner umfassend eine Beschichtung oder Imprägnierung mit löslichem Anteil (Pflanzenextrakt) von Früchten, Gemüse, Kräutern, Heilpflanzen und/oder Tee.

## Revendications

1. Utilisation d'un papier d'emballage pour emballer, aromatiser, ou préparer un aliment,
dans laquelle le papier d'emballage comprend une couche d'un produit végétal fibreux et un extrait végétal appliqués à celui-ci ;
dans laquelle le papier d'emballage ne contient pas de nicotine, d'aluminium, de métaux lourds et/ou de pesticides ;
dans laquelle l'aromatisation est le transfert d'un arôme, une saveur et/ou un goût spécifiques à l'aliment qui est traité avec le papier d'emballage ; et
dans laquelle la préparation est l'utilisation du papier d'emballage dans l'aliment.

2. Utilisation selon la revendication 1, dans laquelle l'aliment est choisi parmi la viande, le poisson, le fromage, les produits de boulangerie, les insectes, les légumes et les fruits, dans laquelle facultativement l'aliment est utilisé sous forme non transformée ou pré-transformée.

3. Utilisation selon la revendication 2, dans laquelle l'aliment est pré-transformé par cuisson, salage, fumage, fermentation, pénétration, pressage, grattage, découpage, attendrissage, ou tout mélange de ceux-ci.

4. Utilisation selon l'une quelconque des revendications 1 à 3, dans laquelle l'aliment emballé est cuit, frit, rôti, cuit au barbecue et/ou cuit au four, dans laquelle facultativement la cuisson, la friture, le rôtissage, la cuisson au barbecue et/ou la cuisson au four sont réalisés dans ou sur un dispositif à cuire, frire, rôtir, cuire au barbecue et/ou cuire au four.

5. Utilisation selon l'une quelconque des revendications 1 à 3, dans laquelle l'aliment emballé est stocké pendant une période spécifique.

6. Utilisation selon l'une quelconque des revendications 1 à 3, dans laquelle l'emballage de l'aliment sert à faire mariner l'aliment.

7. Utilisation selon l'une quelconque des revendications 1 à 6, dans laquelle le papier d'emballage est sous forme d'un papier de cuisson, de feuilles, de formes de type feuille, de bâtons, de bandes, de tasses, de grandes tasses, de sacs, de papillotes, de boîtes, de caisses, de cylindres, de bols, de flasques, de bouilloires, de bouteilles ou similaires, de pailles ou de tubes, de disques ou de plaques.

8. Utilisation selon l'une quelconque des revendications 1 à 7, dans laquelle la plante est choisie dans le groupe constitué de fruits, herbes, plantes médicinales, thé, légumes et/ou épices, dans laquelle facultativement les fruits, herbes, plantes médicinales, thé, légumes et épices sont choisis parmi armoise, mélisse, basilic, camomille, ciboulette, clous de girofle, café, coriandre, aneth, ail, gingembre, ginseng, gingko, jasmin, lavande, menthe, fleur d'oranger, origan, persil, rooibos, rose à cent feuilles, romarin, thym, curcuma, sauge, poivre, piment chili, stevia rebaudiana, estragon, thé blanc, thé jaune, thé vert, thé oolong, thé noir, thé pu-erh, vanille, vigne rouge ou verte, violette et/ou saule ; et/ou Ajowan, graines d'Ajowar (Trachyspermum ammi), Akudjura (Solanum centrale), maceron (Smyrnium olusatrum), Orcanette (Alkanna tinctoria), maniguette, malaguette (mbongochobi), poivre de Guinée (Aframomum danielli, A. citratum, A. exscapum), piment de la Jamaïque (Pimenta dioica), Angélique (Angelica archangelica), anis (Pimpinella anisum), myrte anisé (Syzygium anisatum), Annatto (Bixa orellana), menthe à feuilles rondes (Mentha suaveolens), Assafoetida (Ferula assafoetida), oreillette (Asarum europaeum), benoîte (Geum urbanum), feuille d'avocat (Peresea americana), vinette (Berberis vulgaris et autres espèces Berberis), basilic aux sauces (Ocimum basilicum), basilic citron (Ocimum x citriodorum), basilic Thai (O. basilicum var. thyrsiflora), basilic sacré (Ocimum tenuiflorum), feuille de laurier (Laurus nobilis), feuille de laurier Indien, tejpat, malabathrum, boldo (Peumus boldus), bourrache (Borago officinalis), cardamome brune (Amomum subulatum, Amomum costatum), moutarde noire (Brassica nigra), trigonelle bleue, mélilot bleu (Trigonella caerulea), moutarde brune (Brassica juncea), carvi commun (Carum carvi), cardamome (Elettaria cardamomum), caroube (Ceratonia siliqua), cataire (Nepeta cataria), cannelle type Chine (Cinnamomum aromaticum), poivre de Cayenne (Capsicum annuum), feuille de céleri (Apium graveolens), graine de céleri (Apium graveolens), cerfeuil (Anthriscus cerefolium), chicorée (Cichorium intybus), piment de Chili (espèce Capsicum), ciboulette (Allium schoenoprasum), cerfeuil, cerfeuil musqué (Myrrhis odorata), cilantro, feuilles de coriandre, coriandre (Coriandrum sativum), cannelle indonésienne (Cinnamomum burmannii, Cassia vera), cannelle de Saigon ou du Vietnam (Cinnamomum loureiroi), cannelle véritable ou de Ceylan (Cinnamomum verum, C. zeylanicum), cannelle blanche (Canella winterana), myrte gris (Backhousia myrtifolia), sauge sclarée (Salvia sclarea), girofle (Syzygium aromaticum), graine de coriandre (Coriandrum sativum), chrysanthème balsamique (Tanacetum balsamita), origan cubain (Plectranthus amboinicus), poivre de cubèbe (Piper cubeba), gnaphale (espèce Gnaphalium), panicaut fétide, coriandre chinoise, coriandre longue (Eryngium foetidum), cumin (Cuminum cyminum), feuille de curry (Murraya koenigii), Immortelle d'Italie (Helichrysum italicum), graine d'aneth (Anethum graveolens), aneth ou herbe d'aneth (Anethum graveolens), fleur de sureau (espèce Sambucus), fausse ambroisie, épazote (Dysphania ambrosioides), fenouil (Foeniculum vulgare), fenugrec (Trigonella foenumgraecum), Filé en poudre, gumbo filé (Sassafras albidum), curcuma rond, krachai, clés chinoises (Boesenbergia rotunda), grand galanga (Alpinia galanga), Petit galanga (Alpinia officinarum), Souchet comestible (espèce Cyperus), ciboulette chinoise (Allium tuberosum), ail (Allium sativum), ail éléphant (Allium ampeloprasum var. ampeloprasum), gingembre (Zingiber officinale), rose de porcelaine (Etlingera elatior) (Indonésie), Berce commune, Berce de Perse (Heracleum persicum) (Iran), Grains de paradis (Aframomum melegueta), Grains de Selim, Kili (Xylopia aethiopica), Raifort (Armoracia rusticana), Houttuynia cordata (Vietnam), Huacatay, Tagète des décombres, tagète Lucida (Tagetes minuta), Hysope (Hyssopus officinalis), Feuille de laurier indonésien, daun salam (Syzygium polyanthum), Fleurs de jasmin (espèce Jasminum), Jimbu (Allium hypsistum) (Népal), baie de genévrier (Juniperus communis), Combava (Citrus hystrix) (Asie du sud-est), Zira noir (ou kala jira), cumin noir ou nigelle (Bunium persicum) (Asie du sud), graines de kava (Macropiper excelsum) (Nouvelle-Zélande), Kencur, galanga camphré (Kaempferia galanga), Keluak (Pangium edulé), baume vietnamien (Elsholtzia ciliata), graine de kokum (Garcinia indica) (confiserie indienne), Aframomum d'Ethiopie, fausse cardamome (Aframomum corrorima) (Erythrée), feuilles de koseret (Lippia adoensis) (Ethiopie), Lavande (espèce Lavandula), mélisse officinale (Melissa officinalis), citronnelle (Cymbopogon citratus, C. flexuosus, et autres espèces Cymbopogon), eucalyptus citronné (Eucalyptus staigeriana) (Australie), myrte citronné (Backhousia citriodora) (Australie), verveine citronnelle (Lippia citriodora), Leptotes bicolor (Paraguay et sud du Brésil), Calament népéta (Calamintha nepeta), nepitelle (Italie), réglisse (Glycyrrhiza glabra), fleur de tilleul (espèce Tilia), livèche (Levisticum officinale), macis (Myristica fragrans), mahaleb, cerisier de Sainte-Lucie, bois de Sainte-Lucie (Prunus mahaleb), marjolaine (Origanum majorana), guimauve (Althaea officinalis), pistachier lentisque (Pistacia lentiscus), menthe (espèce Mentha), Pseudowintera colorata « Poivrier » (Nouvelle-Zélande), mauve musquée, ambrette (Abelmoschus moschatus), moutarde noire, moutarde, graine de moutarde (Brassica nigra), moutarde brune, moutarde, graine de moutarde (Brassica juncea), moutarde blanche, moutarde, graine de moutarde (Sinapis alba), Capucine (Tropaeolum majus), nigelle, toute-épice, nigelle cultivée, graine d'oignon (Nigella sativa), njansang Essessang (Ricinodendron heudelotii) (Afrique de l'Ouest), muscade (Myristica fragrans), neem (Eucalyptus olida) (Australie), origan (Origanum vulgare, O. heracleoticum, et autres espèces), racine d'Iris (Iris germanica, I. florentina, I. pallida), fleur de Pandan, kewra (Pandanus odoratissimus), Feuille de Pandan, baquois (Pandanus amaryllifolius), paprika (Capsicum annuum), Cresson de Para (Spilanthes acmella, Soleracea) (Brésil), persil (Petroselinum crispum), Poivre : noir, blanc, et vert (Piper nigrum), poivre, Dorrigo (Tasmannia stipitata) (Australie), poivre long (Piper longum), poivre des montagnes, poivre de Tasmanie (Tasmannia lanceolata), menthe poivrée (Mentha piperata), Eucalyptus Dives mentholé (Eucalyptus dives), Perilla, shiso (espèce Périlla), poivrier sauvage (Schinus molle), Pandanus amaryllifolius, baies roses ou poivre rose (Schinus terebinthifolius), Quinine de Cayenne (Quassia amara) (épice amère dans des apéritifs et certaines bières et vins mutés), ail des ours, ail des bois (Allium ursinum), herbe à paddy (Limnophila aromatica) (Vietnam), romarin (Rosmarinus officinalis), rue (Ruta graveolens), carthame (Carthamus tinctorius), pour la couleur jaune, Safran (Crocus sativus), sauge (Salvia officinalis), cannelle de Saigon (Cinnamomum loureiroi), Pimprenelle (Sanguisorba minor), Salep (Orchis mascula), Sassafras (Sassafras albidum), Sarriette des jardins (Satureja hortensis), Sarriette des montagnes (Satureja montana), Silphium, silphion, laser, laserpicium (cuisine de la Rome antique), cuisine de la Grèce antique), shiso (Perilla frutescens), oseille (Rumex acetosa), petite oseille (Rumex acetosella), menthe verte (Mentha spicata), nard de l'Himalaya (Nardostachys grandiflora ou N. jatamansi), anis étoilé (Illicium verum), sumac (Rhus coriaria), aspérule odorante (Galium odoratum), poivre de Széchuan, poivre de Sichuan (Zanthoxylum piperitum), estragon (Artemisia dracunculus), thym (Thymus vulgaris), thym citron (Thymus x citriodorus), curcuma (Curcuma longa), vanille (Vanilla planifolia), cannelle du Vietnam (Cinnamomum loureiroi), coriandre vietnamienne (Persicaria odorata), poivre Voatsiperifery (Piper borbonense), wasabi (Wasabia japonica), renouée poivre d'eau, renouée (Polygonum hydropiper), cresson de fontaine (Rorippa nasturtium-aquatica), graine d'acacia (d'environ 120 espèces d'Acacia d'Australie), moutarde blanche (Sinapis alba), bétel sauvage (Piper sarmentosum) (Asie du sud-est), serpolet (Thymus serpyllum), épilobe (Epilobium parviflorum), sarriette des montagnes (Satureja montana), gaulthérie couchée (Gaultheria procumbens), benoîte commune, herbe de Saint-Benoît (Geum urbanum), aspérule odorante (Galium odoratum), armoise, absinthe (Artemisia absinthium), moutarde jaune (Brassica hirta = Sinapis alba), sarriette de Douglas, l'une quelconque de quatre espèces différentes, dont de nombreuses non apparentées du zaatar (des herbes des genres Origanum, Calamintha, Thymus, et/ou Satureja), zédoaire (Curcuma zedoaria) ; et/ou thé à l'anis (graines ou feuilles), feuille de cotylédon asiatique, thé à l'artichaut, monarde écarlate, boldo, bardane, thé de carvi, thé à la cataire, thé à la camomille, thé Che Dang (feuilles d'Ilex causue), thé à la renouée chinoise, thé aux chrysanthèmes, cannelle, thé de coca, feuilles de thé de café et thé à la cerise de café, margase, écorce d'agrume (incluant l'écorce de bergamote, de citron et d'orange), café de pissenlit, thé à l'aneth, thé à l'échinacée, baie de sureau, gui d'Europe (Viscum album), thé Essiac, fenouil, gentiane, racine de gingembre, ginseng, goji, aubépine, hibiscus, tisane Ho Yan Hor, honeybush, marrube blanc, houttuynia, thé à l'hortensia (Hydrangea serrata Amacha), jiaogulan, épilobe à feuilles étroites, racine de Kava, kratom, kudzu, thé du Labrador, pau d'arco (également connu sous le nom de Taheebo), mélisse officinale, thé au citron et au gingembre, citronnelle, fruit des moines, racine de réglisse, fleur de tilleul, menthe, Thé de montagne, feuille de neem, feuille d'ortie, thé du New Jersey, thé au noni, oksusu cha, feuille de menthe pouliot, thé au pin, qishr, thé au trèfle rouge, feuille de framboisier, thé au malt torréfié, blé torréfié, rooibos (thé rouge), fruit de rosier, pétales de Roselle (espèces d'Hibiscus ; alias Bissap, Dah, etc.), romarin, armoise, armoise de Californie, sauge, sakurayu, sauge sclarée, riz roussi, scutellaire, baie du Sri Lanka (thé), sobacha, benjoin odoriférant (Lindera benzoin), thé à l'épinette, fruit du sumac vinaigrier, stevia, thé au millepertuis (Camellia sinensis), thym, basilic tulsi, Basilic sacré, liane du Pérou, Uncaria tomentosa, communément connue sous le nom de griffe de chat, valériane, verveine (Vervains), vétiver, courge cireuse, Wong Lo Kat, aspérule, et/ou achillée ; et/ou açaï (Euterpe oleracea), luzerne (Medicago sativa), Arnica (Arnica Montana), euphorbe hérissée (Euphorbia hirta), astragale (Astragalus propinquus), vinette (Berberis vulgaris), belladone (Atropa belladonna), myrtille (Vaccinium myrtillus), margose (Momordica charantia), vernonie (Vernonia amygdalina), orange amère (Citrus x aurantium), actée à grappes noires (Actaea racemosa), chardon béni (Cnicus benedictus), bleuet (genre Vaccinium), bardane (Arctium lappa), griffe de chat (Uncaria tomentosa), piment de Cayenne (Capsicum annuum), céleri (Apium graveolens), camomille (Matricaria recutita et Anthemis nobilis), créosotier (Larrea tridentata), gattilier (Vitex agnus-castus), piment chili (Capsicum frutescens), quinquina, clou de girofle (Syzygium aromaticum), Senna occidentalis (Cassia occidentalis), consoude officinale (Symphytum officinale), airelle (Vaccinium macrocarpon), pissenlit (Taraxacum officinale), angélique de Chine (Angelica sinensis), sureau (Sambucus nigra), Eucalyptus (Eucalyptus globulus), gui d'Europe (Viscum album), onagre (espèce Oenothera), fenugrec (Trigonella foenum-graecum), grande camomille (Tanacetum parthenium), graine de lin (Linum usitatissimum), ail (Allium sativum), gingembre (Zingiber officinale), gingko (Gingko biloba), ginseng (Panax ginseng et Panax quinquefolius), hydraste du Canada (Hydrastis canadensis), raisin (Vitis vinifera), goyave (Psidium guajava), aubépine (précisément Crataegus monogyna et Crataegus laevigata), hoodia (Hoodia gordonii), marron d'Inde (Aesculus hippocastanum), prêle (Equisetum arvense), piscidie (Piscidia erythrina ou Piscidia piscipula), kava (Piper methysticum), khat, konjac (Amorphophallus konjac), kratom (Mitragyna speciosa), Kanna (Sceletium tortuosum), lavande (Lavandula angustifolia), citron (Citrus limon), racine de réglisse (Glycyrrhiza glabra), souci (Calendula officinalis), guimauve (Althaea officinalis), chardon-Marie (Silybum marianum), neem (Azadirachta indica), noni (Morinda citrifolia), origan (Origanum vulgare), papaye (Carica papaya), menthe poivrée (Mentha x piperita), échinacée pourpre (Echinacea purpurea), fleur de la passion (Passiflora), trèfle rouge (Trifolium pratense), romarin (Rosmarinus officinalis), sauge (Salvia officinalis), rue de Syrie (alias Harmal) (Peganum harmala), millepertuis perforé (Hypericum perforatum), chou palmiste (Serenoa repens), vigne du tonnerre divin (Tripterygium wilfordii), thym (Thymus vulgaris), basilic Tulsi (Ocimum tenuiflorum ou basilic sacré), curcuma (Curcuma longa), umckaloabo ou Pérlagonium du Cap (Pelargonium sidoides), valériane (Valeriana officinalis), saule blanc (Salix alba), et/ou herbe sainte ou yerba santa (Eriodictyon crassifolium) ; et/ou thé blanc, thé jaune, thé vert, thé oolong, thé noir, et/ou thé pu-erh ; incluant des mélanges ou des préparations de ceux-ci.

9. Utilisation selon l'une quelconque des revendications 1 à 8, dans laquelle la couche de produit végétal fibreux et/ou dans laquelle l'extrait végétal comprennent un mélange de différentes plantes ou proviennent de la même plante ou de plantes différentes.

10. Utilisation selon l'une quelconque des revendications 1 à 9, dans laquelle la couche de produit végétal fibreux comprend au moins 70 % de produit végétal fibreux provenant d'une plante, ou dans laquelle la couche de produit végétal fibreux et l'extrait végétal comprennent au moins 70 % d'un extrait végétal provenant d'une plante.

11. Utilisation selon l'une quelconque des revendications 1 à 10, dans laquelle le papier d'emballage est sous la forme d'un voile de fibre comprenant d'environ 5 % à environ 100 % (p/p) de fibres d'herbes, d'épices, de plantes médicinales, de thé, de fruits et/ou de légumes.

12. Utilisation selon la revendication 11, dans laquelle le voile de fibre comprend des fibres d'herbes, d'épices, de thé, de plantes médicinales, de fruits et/ou de légumes et des fibres cellulosiques et/ou des fibres synthétiques dans un rapport de 40/60 (p/p), 60/40 (p/p) ou 80/20 (p/p).

13. Utilisation selon l'une quelconque des revendications 1 à 12, comprenant en outre des fibres cellulosiques et/ou synthétiques.

14. Utilisation selon l'une quelconque des revendications 1 à 13, comprenant en outre un enrobage ou une imprégnation avec une portion soluble (extrait végétal) de fruits, légumes, herbes, plantes médicinales, et/ou thé.
